# EUROPEAN PATENT APPLICATION

(11) **EP 1 879 194 A1**
(43) Date of publication of application: **16.01.2008**
(21) Application number: 06732324.6
(22) Date of filing: 25.04.2006
(51) Int. Cl.: G11B 27/00, G06F 12/00, G11B 20/10

(54) **INFORMATION RECORDING/REPRODUCING DEVICE, INFORMATION RECORDING/REPRODUCING METHOD, INFORMATION RECORDING/REPRODUCING PROGRAM, AND COMPUTER-READABLE RECORDING MEDIUM CONTAINING THE INFORMATION RECORDING/REPRODUCING PROGRAM**

(30) Priority: 26.04.2005 JP 2005127441
(71) Applicant: MATSUSHITA ELECTRIC INDUSTRIAL CO., LTD., Osaka 571-8501 (JP)
(72) Inventor: NAMBA, Takaaki, c/o Matsushita El. Ind. Co., Ltd., IPROC, Shiromi, Chuo-ku, Osaka-shi, Oska 540-6207 (JP); MIZUNO, Yusuke, c/o Matsushita El. Ind. Co., Ltd., IPROC, Shiromi, Chuo-ku, Osaka-shi, Osaka 540-6207 (JP)
(74) Representative: Schwabe - Sandmair - Marx
(86) International application number: PCT/JP2006/308664
(87) International publication number: WO 2006/118119

(57) **Abstract**

A single entity of contents information is recorded across plural recording media, and seamless reproduction is enabled by ensuring a reproduction sequence. A contents control unit 616 records a part of contents information into a first recording medium and records the rest part of the contents information into a second recording medium different from the first recording medium. A contents attachment information management unit 618 generates link information indicating that the part of the contents information recorded in the first recording medium is continuous with the rest part recorded in the second recording medium, and records the link information thus generated into at least one of the first recording medium and the second recording medium while recording the link information into a file different from a file in which the contents information is recorded.

## Description

### Technical Field

The present invention relates to an information recording/reproducing device that records, reproduces, and edits contents information of various kinds, such as moving image information, still image information, sound information, and character information, information other than the foregoing, and more than one of the foregoing, an information recording/reproducing method, an information recording/reproducing program, and a computer-readable recording medium containing the information recording/reproducing program.

More particularly, the invention relates to an information recording/reproducing device that divides a single entity of contents information to be recorded across plural recording media and reproduces systematically the contents information thus divided and recorded across these plural recording media, an information recording/reproducing method, an information recording/reproducing program, and a computer-readable recording medium containing the information recording/reproducing program.

### Background Art

For an information recording/reproducing device that records and reproduces contents information of various kinds, such as moving image information, still image information, sound information, and character information, information other than the foregoing, and more than one of the foregoing, an information recording/reproducing method, an information recording/reproducing program, and a computer-readable recording medium containing the information recording/reproducing program, there is an information recording device described, for example, in Patent Document 1 specified below.

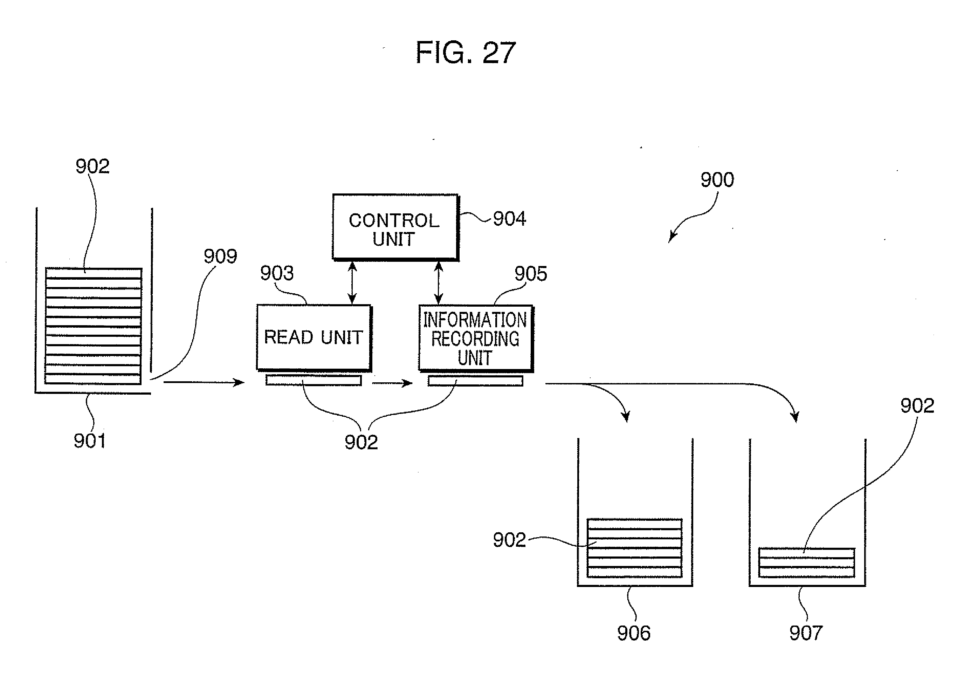

Fig. 27 is a view showing the configuration of an information recording device 900 as an example of a conventional information recording device. Plural recording media 902 appended with identification information are loaded in an input stacker 901. The recording media 902 are, for example, flexible discs, and the identification information is provided, for example, in the form of a bar-code, so that a seal exhibiting the bar-code is laminated onto the surface of each flexible disc.

The recording media 902 loaded in the input stacker 901 are taken out one by one through a discharge opening 909 and sent to a read unit 903. In the read unit 903, the bar-code laminated onto the surface of each recording medium 902 is read with the use of an optical scanner, and the identification information thus read is sent to a control unit 904.

The control unit 904 records and manages the identification information and sends information to be recorded into the recording media 902 to an information recording unit 905 in correlation with the identification information. After the bar-code is read in the read unit 903, the recording medium 902 is sent to the information recording unit 905. The information recording unit 905 records the information sent from the control unit 904 into the recording medium 902 sent from the read unit 903.

In this instance, it is not always possible to record the entire information to be recorded into the recording media 902 in a single recording medium 902. For example, in a case where information to be recorded is high-quality moving image information or the like, because an information volume is generally quite large, it is less likely that the entire information is stored in a single recording medium 902.

In such a case, because the control unit 904 has obtained the recording capacity of one recording medium 902, of the entire information to be recorded, it sends a part that can be recorded in one recording medium 902 to the information recording unit 905. When another recording medium 902 is sent to the information recording unit 905, the control unit 904 sends the rest part of the information to be recorded to the information recording portion 905. The rest part of the information to be recorded is thus recorded into another recording medium 902.

As has been described, the control unit 904 sends the information to be recorded into recording media 902 to the information recording unit 905 while correlating the information with the identification information of the recording media 902. Hence, even when the information to be recorded is recorded across plural recording media 902, it is possible to manage the information by keeping track as to which part of the information is recorded in which recording medium.

Thereafter, the recording medium 902 in which is recorded the information in the information recording unit 905 is sent to an output stacker 906 and subjected to processing, such as storage and dispatching. A recording medium 902 having a failure in reading of the identification information in the read unit 903 and a recording medium 902 having a failure in recording information in the information recording unit 905 are sent to an inferior article stacker 907.

In the conventional information recording device 900 as described above, however, the control portion 904 enables management by keeping track of the correlation between the information recorded in recording media 902 and the identification information of these recording media 902. Hence, in a case where a single entity of information is recorded across plural recording media 902, when these recording media 902 are used in another device, there is a problem that this device fails to manage a series of these recording media 902 across which is recorded a single entity of information by keeping track thereof, which makes it impossible to get access to the single entity of information continuously with the use of these recording media 902.

In addition, should the device succeed in obtaining the correlation between the information recorded in the recording media 902 and the identification information of the recording media 902 in one way or another, this correlation is about the recorded information and the identification information of each recording medium. Hence, in a case where plural pieces of information are recorded in a single recording medium 902, there is a problem that this device still fails to find out which ones of the plural pieces of information are continuous pieces of information.
[Patent Document 1] JP-A-10-187503

### Disclosure of the Invention

The invention was devised to solve the problems discussed above, and has an object to provide an information recording/reproducing device capable of recording a single entity of contents information across plural recording media and enabling seamless reproduction by ensuring the reproduction sequence, an information recording/reproducing method, an information recording/reproducing program, and a computer-readable recording medium containing the information recording/reproducing program.

In an aspect of the invention, an information recording/reproducing device of the invention includes: a contents information recording unit for recording a part of contents information into a first recording medium and recording a rest part of the contents information into a second recording medium different from the first recording medium; and a link information recording unit for generating link information indicating that the part of the contents information recorded in the first recording medium is continuous with the rest part recorded in the second recording medium, and recording the thus-generated link information into at least one of the first recording medium and the second recording medium, wherein the link information recording unit records the link information into a file different from a file in which the contents information is recorded.

In another aspect of the invention, an information recording/reproducing method includes: a contents information recording step of recording a part of contents information into a first recording medium, and recording a rest part of the contents information into a second recording medium different from the first recording medium; and a link information recording step of generating link information indicating that the part of the contents information recorded in the first recording medium is continuous with the rest part recorded in the second recording medium, and recording the thus-generated link information into at least one of the first recording medium and the second recording medium, wherein, in the link information recording controlling step, the link information is recorded in a file different from a file in which the contents information is recorded.

In still another aspect of the invention, an information recording/reproducing program causes a computer to function as: a contents information recording control unit for providing an instruction to record a part of contents information into a first recording medium and to record a rest part of the contents information into a second recording medium different from the first recording medium; and a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium, wherein the link information recording control unit provides an instruction to record the link information into a file different from a file in which the contents information is recorded.

In still another aspect of the invention, a computer-readable recording medium containing an information recording/reproducing program contains an information recording/reproducing program that causes a computer to function as: a contents information recording control unit for providing an instruction to record a part of contents information into a first recording medium and to record a rest part of the contents information into a second recording medium different from the first recording medium; and a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium, wherein the link information recording control unit provides an instruction to record the link information into a file different from a file in which the contents information is recorded.

According to these configurations, a part of contents information is recorded in a first recording medium and the rest part of the contents information is recorded in a second recording medium different from the first recording medium. The link information indicating that the part of the contents information recorded in the first recording medium is continuous with the rest part recorded in the second recording medium is generated, and the link information thus generated is recorded into at least one of the first recording medium and the second recording medium. In this instance, the link information is recorded in a file different from a file in which the contents information is recorded.

Hence, because the link information indicating that the part of the contents information recorded in the first recording medium is continuous with the rest part recorded in the second recording medium is recorded in at least one of the first recording medium and the second recording medium, it is possible to record a single entity of contents information across plural recording media. Further, because the reproduction sequence can be ensured, it is possible to perform seamless reproduction.

In still another aspect of the invention, an information recording/reproducing device includes: a contents information recording unit for recording a part of contents information into a first recording medium and recording a rest part of the contents information into a second recording medium different from the first recording medium; and a link information recording unit for generating link information indicating that the part of the contents information recorded in the first recording medium is continuous with the rest part of the contents information recorded in the second recording medium, and recording the thus-generated link information into the part of the contents information recorded in the first recording medium and the rest part of the contents information recorded in the second recording medium.

According to this configuration, a part of the contents information is recorded in a first recording medium and the rest part of the contents information is recorded in a second recording medium different from the first recording medium. The link information indicating that the part of the contents information recorded in the first recording medium is continuous with the rest part of the contents information recorded in the second recording medium is generated. The link information thus generated is recorded into the part of the contents information recorded in the first recording medium and the rest part of the contents information recorded in the second recording medium.

Hence, because the need to hold the link information separately is eliminated, it is possible to reproduce the rest part of the contents information recorded in the second recording medium while reproducing the part of the contents information recorded in the first recording medium.

The above and other objects, features, and advantages of the invention will become more apparent from the following detailed descriptions with reference to the accompanying drawings.

### Brief Description of the Drawings

Fig. 1 is conceptual view showing a state where contents information is recorded across plural information recording media in an information recording/reproducing device according to a first embodiment of the invention.
Fig. 2 is a view showing a first example of the directory structure when contents information is recorded across plural information recording media in the information recording/reproducing device according to the first embodiment of the invention.
Fig. 3 is a view showing a second example of the directory structure when contents information is recorded across plural : information recording media in the information recording/reproducing device according to the first embodiment of the invention.
Fig. 4 is a view showing a third example of the directory structure when contents information is recorded across plural information recording media in the information recording/reproducing device according to the first embodiment of the invention.
Fig. 5 is a view showing an example of an all media relevant information integrated management table recorded in a contents attachment information file.
Fig. 6 is a view showing the module configuration of the information recording/reproducing device according to the first embodiment of the invention.
Fig. 7 is a view showing the functional block of the information recording/reproducing device according to the first embodiment of the invention.
Fig. 8 is a first flowchart used to describe recording processing by the information recording/reproducing device shown in Fig. 6.
Fig. 9 is a second flowchart used to describe the recording processing by the information recording/reproducing device shown in Fig. 6.
Fig. 10 is a flowchart used to describe link information generation processing in Step S8 of Fig. 8.
Fig. 11 is a flowchart used to describe recording processing of contents information by the information recording/reproducing device shown in Fig. 6.
Fig. 12 is a flowchart used to describe editing processing of contents information by the information recording/reproducing device shown in Fig. 6.
Fig. 13 is a flowchart used to describe link information editing processing in Step S57 of Fig. 12.
Fig. 14 is a view showing the module configuration of an information recording/reproducing device according to a second embodiment of the invention.
Fig. 15 is a view showing the functional block of the information recording/reproducing device according to the second embodiment of the invention.
Fig. 16 is a conceptual view showing a state where contents information is recorded across plural information recording media in the information recording/reproducing device according to the second embodiment of the invention.
Fig. 17 is a conceptual view showing another example of the state where contents information is recorded across plural information recording media in the information recording/reproducing device according to the second embodiment of the invention.
Fig. 18 is a view showing an example of an all media relevant information integrated management table in the information recording/reproducing device according to the second embodiment of the invention.
Fig. 19 is a conceptual view showing a state where contents information is recorded across plural recording media of an information recording/reproducing device according to a third embodiment of the invention.
Fig. 20 is a view showing an example of a display screen in the recording state of the contents information shown in Fig. 19.
Fig. 21 is a conceptual view showing another example of the state where contents information is recorded across plural information recording media in the information recording/reproducing device according to the third embodiment of the invention.
Fig. 22 is a view showing an example of a display screen in the recording state of the contents information shown in Fig. 21.
Fig. 23 is a view showing a second another example of the state where contents information is recorded across information recording media.
Fig. 24 is a view showing a third another example of the state where contents information is recorded across information recording media.
Fig. 25 is a view showing a fourth another example of the state where contents information is recorded across information recording media.
Fig. 26 is a view showing a fifth another example of the state where contents information is recorded across information recording media.
Fig. 27 is a view showing the configuration of an information recording/reproducing device as an example of a conventional information recording/reproducing device.

### Best Mode for Carrying Out the Invention

Hereinafter, an information recording/reproducing device according to one embodiment of the invention will be described with reference to the drawings.

### (First Embodiment)

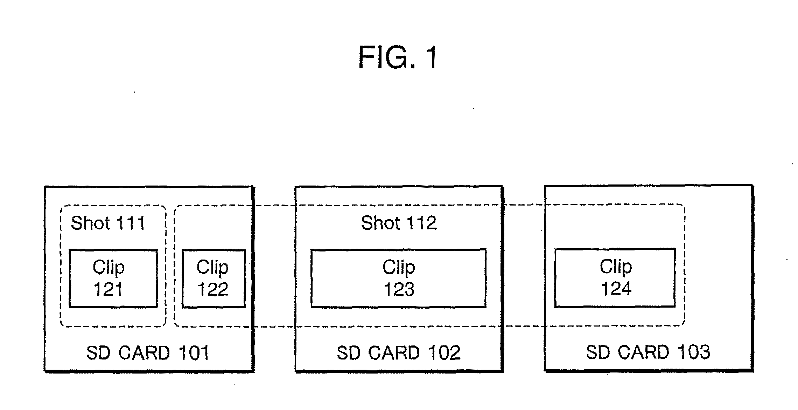

Fig. 1 is a conceptual view showing a state where contents information is recorded across plural information recording media in an information recording/reproducing device according to a first embodiment of the invention. To be more concrete, in Fig. 1, contents information is recorded across an SD (Secure Digital) card 101, an SD card 102, and an SD card 103.

Herein, Shot 111 and Shot 112 shown in Fig. 1 correspond to contents information of the invention. To be more concrete, examples include moving image information, still image information, sound information, character information, information other than the foregoing, and stream information containing more than one of the foregoing.

In the example shown in Fig. 1, because Shot 111 is contents information having a relatively small volume, it is recorded in the SD card 101 serving as one recording medium. On the contrary, because Shot 112 is contents information having a relatively large volume, it cannot be recorded in a single recording medium and it is recorded across three SD cards, the SD card 101, the SD card 102, and the SD card 103.

In addition, a part of each Shot corresponding to a single entity of contents information in each recording medium is referred to as Clip. Because Shot 111 is recorded entirely in the SD card 101, it is made of Clip 121 alone. Because Shot 112 is recorded across three SD cards 101, 102, and 103, it is made of three Clips, Clip 122, Clip 123, and Clip 124.

Clip 122 is a part of Shot 112 in the SD card 101. Clip 123 is another part of Shot 112 in the SD card 102. Clip 124 is still another part of Shot 112 in the SD card 103.

The SD card 102 has recorded Clip 123 in its recordable area to the full, and is no longer able to record any other contents information. Meanwhile, the SD card 101 has recorded Clip 121 of Shot 111 and Clip 122 of shot 112 in its recordable area. The SD card 103 has recorded Clip 124 of Shot 112 in its recordable area. There is a possibility that the recordable area is not fully used, and in such a case, Clip of any other contents information may possibly be recorded therein.

According to the specifications of the recording of contents information in compliance with the conventional SD card standards, Shot 112, which is contents information that needs to be recorded across plural recording media, can neither be recorded nor reproduced, for example, due to the limitation imposed by the file system, such as FAT (File Allocation Table) 16 and FAT 32, the limitation imposed by a recording capacity of a medium, the limitation imposed by the controllable numbers of files and directories, and so forth. Even when the specifications are changed for extension to record Shot 112 across plural recording media, it is difficult for the device to specify which recording medium is loaded therein. When the recording media are removable media or the like, it is particularly difficult for the device to specify which recording medium is loaded therein. Hence, neither can the reproduction sequence of the contents information recorded across plural media be ensured, nor can seamless reproduction thereof be ensured.

However, the information recording/reproducing device according to the first embodiment of the invention is capable of ensuring seamless reproduction by ensuring the reproduction sequence of the contents information recorded across plural recording media, that is, across the SD card 101, the SD card 102, and the SD card 103.

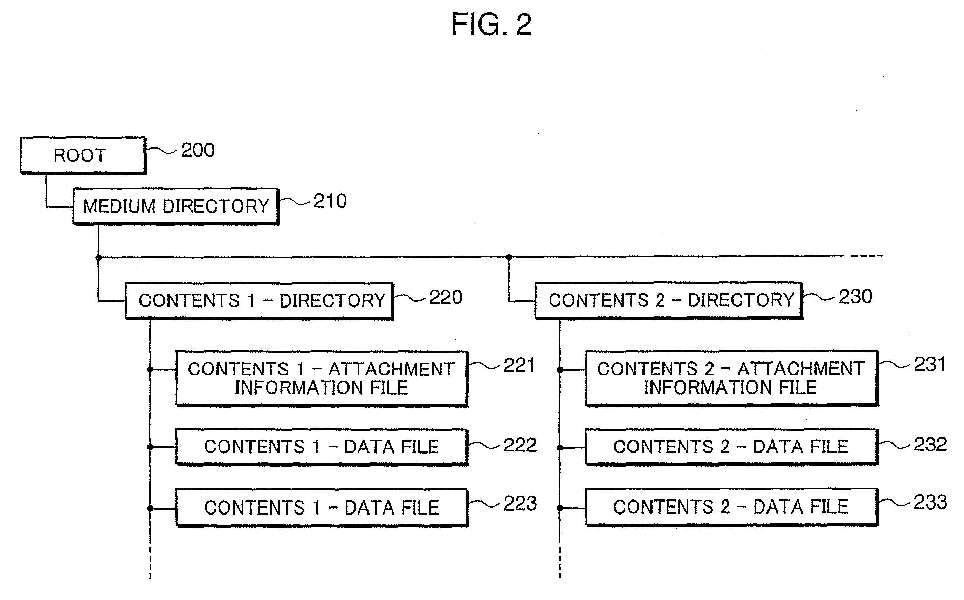

Fig. 2 is a view showing a first example of the directory structure when contents information is recorded across plural information recording media in the information recording/reproducing device according to the first embodiment of the invention. To be more concrete, Fig. 2 shows the directory structure when the contents information is recorded across the SD card 101, the SD card 102, and the SD card 103.

A ROOT directory 200 is a directory serving as the basis of an entire single information recording medium, and it is a directory that is essentially present only in a singular form in one recording medium. All the directories in one recording medium are created under the ROOT directory 200.

In the first example, a medium directory 210 is created under the ROOT directory 200. The medium directory 210 is a directory responsible for one information recording medium. However, the number thereof for one information recording medium is not necessarily limited to one, and two or more medium directories 210 may be provided. In this case, one information recording medium is managed as if it were two or more information recording media.

In the first example, a contents directory is created under the medium directory 210. The contents directory is created in the matching number with the contents information. The example of Fig. 2 shows only a contents 1 - directory 220 and a contents 2 - directory 230. However, the number of the contents directories is not necessarily limited to two, and they can be present in any number under each medium directory 210.

The contents directory is a directory to record contents information, and as a rule, a single entity of contents information is recorded in one contents directory. For instance, in the example shown in Fig. 1, two contents directories are created under the medium directory of the SD card 101. These two contents directories are, for example, a contents 111 directory and a contents 112 directory. Herein, the contents directory corresponding to Shot 111 is referred to as the contents 111 directory and the contents directory corresponding to Shot 112 is referred to as the contents 112 directory.

A part of Shot 111 recorded in the SD card 101, that is, Clip 121, is recorded in the contents 111 directory. As has been described, Clip 121 contains Shot 111 entirely. A part of Shot 112 recorded in the SD card 101, that is, Clip 122, is recorded in the contents 112 directory. As has been described, Clip 122 is not the whole of Shot 112, and the rest part of Shot 112 is recorded in the SD card 102 and the SD card 103.

Likewise, one contents directory is created under the medium directory of the SD card 102. This contents directory is, for example, the contents 112 directory. However, the number of the contents directory under the medium directory of the SD card 102 is not necessarily limited to one, and another contents directory may be present as well. A part of Shot 112 recorded in the SD card 102, that is, Clip 123, is recorded in the contents 112 directory under the medium directory of the SD card 102.

Likewise, one contents directory is created under the medium directory of the SD card 103. This contents directory is, for example, the contents 112 directory. However, the number of the contents directory under the medium directory of the SD card 103 is not necessarily limited to one, and another contents directory may be present as well. A part of Shot 112 recorded in the SD card 103, that is, Clip 124, is recorded in the contents 112 directory under the medium directory of the SD card 103.

One contents attachment information file and several contents data files are created under each contents directory, into which contents attachment information and contents data are recorded, respectively. For instance, in the example shown in Fig. 2, one contents 1 - attachment information file 221 and two contents data files, that is, a contents 1 - data file 222 and a contents 1 - data file 223, are created under the contents 1- directory 220, into which contents attachment information and contents data are recorded, respectively.

Likewise, one contents 2 - attachment information file 231 and two contents data files, that is, a contents 2- data file 232 and a contents 2 - data file 233, are created under the contents 2 directory 230, into which contents attachment information and contents data are recorded, respectively.

As with the case where the number of the contents directories contained under each medium directory is not limited to two as described above, the number of the contents attachment information file contained in each contents directory is not limited to one and the number of the contents data files is not limited to two, either.

Attribute information and attachment relevant information of various kinds about the contents information contained in the corresponding contents directory are recorded in the contents attachment information file. A detailed example of the contents attachment information file will be described below.

The contents information itself is recorded in each contents data file. The contents information is then encoded, streamed, or encrypted in various formats in response to each file system, the file management, the attributes and the natures of the contents of interest, and so forth, and divided into data of various sizes to be recorded and saved as the contents data.

For example, in a case where the contents information is moving image information, information in the transport stream format encoded in the MPEG-2 format or the MPEG-4 format is stored in the contents data file. In a case where the contents information is sound information, information encoded in the MP3 format is stored therein. In a case where the contents information is still image information, information about one picture encoded in the JPEG format is stored therein. In a case where the contents information is document information, a single entity of document information in the MS-WORD (registered trademark) format is stored therein.

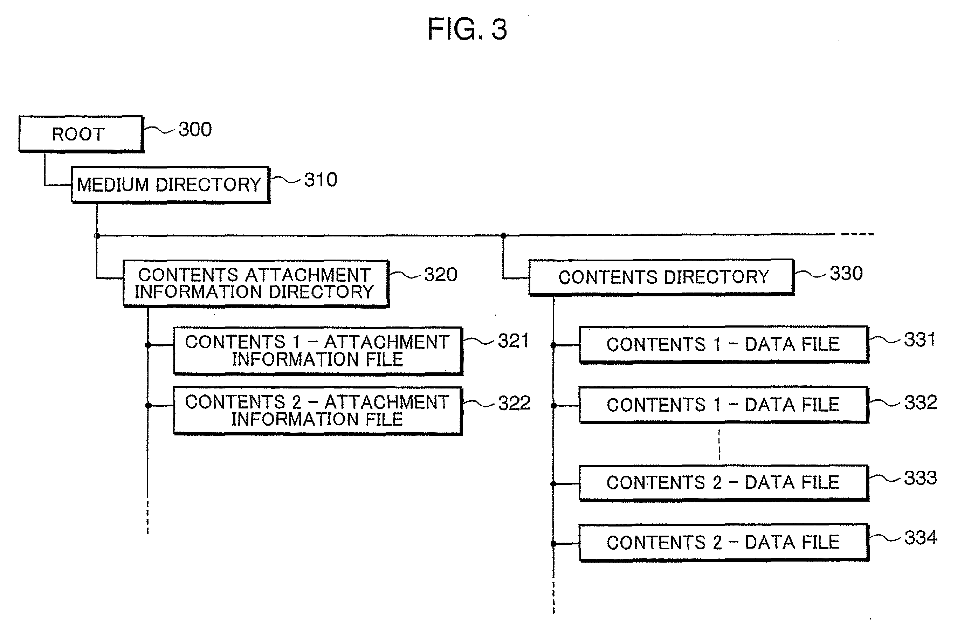

Fig. 3 is a view showing a second example of the directory structure when contents information is recorded across plural information recording media in the information recording/reproducing device according to the first embodiment of the invention. To be more concrete, Fig. 3 shows the directory structure when the contents information is recorded across the SD card 101, the SD card 102, and the SD card 103.

A ROOT directory 300 is a directory serving as the basis of an entire single information recording medium, and it is a directory that is essentially present only in a singular form in one recording medium. All the directories in one recording medium are created under the ROOT directory 300.

In the second example, a medium directory 310 is created under the ROOT directory 300. The medium directory 310 is a directory responsible for one information recording medium. However, the number thereof for one information recording medium is not necessarily limited to one, and two or more medium directories 310 may be provided. In this case, one information recording medium is managed as if it were two or more information recording media. This is the same as in the first example described above.

In the second example, one contents attachment information directory 320 and one contents directory 330 are created under the medium directory 310. The contents attachment information directory 320 and the contents directory 330 are not necessarily provided in a singular form, and each can be present in any number.

The contents attachment information directory 320 is a directory to record and store the contents attachment information file, and the contents directory 330 is a directory to record and store the contents information itself. The contents attachment information file is created in the matching number with the contents information. Attribute information and attachment relevant information of various kinds about the contents information recorded and stored in the contents directory are recorded in the contents attachment information file. A detailed example of the contents attachment information file will be described below. The example of Fig. 3 shows only two files, a contents 1 - attachment information file 321 and a contents 2 - attachment information file 322. However, the number of the contents attachment information files is not necessarily limited to two, and they can be present in any number under each medium directory.

The contents directory 330 is a directory to record and store the contents information itself. A contents 1 - data file 331, a contents 1 - data file 332, ..., contents 2 - data file 333, and a contents 2 - data file 334 are recorded and stored in the contents directory 330. It should be appreciated, however, that this configuration is a mere example, and files recorded and stored in the contents directory 330 are not limited to these contents data files, and any number of contents data files can be recorded and stored therein.

For example, in the example shown in Fig. 1, the contents 1 - data file 331 and the contents 1 - data file 332 are Shot 111, which is the contents information recorded and stored in the SD card 101. In a case where Shot 111 is, for example, still image information encoded in the JPEG format, the contents 1 - data file 331 may be one picture of still image information and the contents 1 - data file 332 may be another picture of still image information.

Likewise, in the example shown in Fig. 1, for example, the contents 2 - data file 333 and the contents 2 - data file 334 are Clip 122 of Shot 112, which is the contents information recorded and stored in the SD card 101. In a case where Clip 122 is, for example, moving image information encoded in the MPEG-2 format, the contents 2 - data file 333 may be one GOP (Group of Picture) of moving image information and the contents 2 - data file 334 may be another GOP. As the contents 2 - data files for such a case, only the contents 2 - data file 333 and the contents 2 - data file 334 are shown in Fig. 3. In practice, however, many more contents 2 - data files are contained.

Also, as has been described, files recorded and stored in the contents directory 330 are not limited to the contents data files shown in Fig. 3, and any number of contents data files can be recorded and stored therein. For example, a contents 1 - data file, a contents 2 - data file, a contents 3 - data file, ..., a contents N - data file may be recorded and stored therein. In such a case, contents n - attachment information files (1 ≦ n ≦ N) corresponding to respective contents n - data files (1 ≦ n ≦ N) are recorded and stored in the contents attachment information directory 320.

Further, each of the contents n - data files (1 ≦ n ≦ N) may contain any number of contents data files, such as a contents n - data file 1, a contents n - data file 2, a contents n - data file 3, ..., and contents n - data file K (1 ≦ K). Herein, each of N, n and K is a positive integer.

As has been described, because the contents attachment information files are recorded in a directory different from the directory in which the contents data files are recorded, the contents attachment information file is not recorded together with the contents data file. It is thus possible to read out the contents attachment information file alone individually for use.

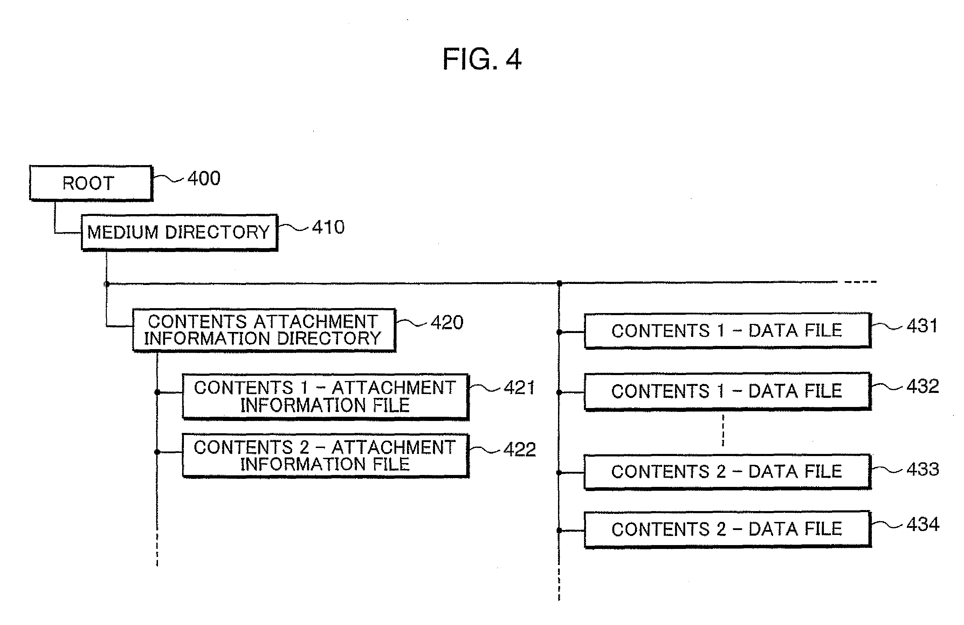

Fig. 4 is a third example of the directory structure when contents information is recorded across plural information recording media in the information recording/reproducing device according to the first embodiment of the invention. To be more concrete, Fig. 3 shows the directory structure when contents information is recorded across the SD card 101, the SD card 102, and the SD card 103.

A ROOT directory 400 is a directory serving as the basis of an entire single information recording medium, and it is a directory that is essentially present only in a singular form in each recording medium. All the directories in one recording medium are created under the ROOT directory 400.

In the third example, a medium directory 410 is created under the ROOT directory 400. The medium directory 410 is a directory responsible for one information recording medium. However, the number thereof for one information recording medium is not necessarily limited to one, and two or more medium directories 410 may be provided. In this case, one information recording medium is managed as if it were two or more information recording media. This is the same as in the first example and the second example.

In the third example, one contents attachment information directory 420 and an arbitrary number of contents data files are created under the medium directory 410. It should be appreciated that the number of the contents attachment information directory 420 is not necessarily limited to one, and it can be present in any number.

The contents attachment information directory 420 is a directory to record and store the contents attachment information file. The contents attachment information file is created in the matching number with the contents information. Attribute information and attachment relevant information of various kinds about the contents information recorded and stored in the recording medium are recorded in the contents attachment information file. A detailed example of the contents attachment information file will be described below. The example of Fig. 4 shows only two files, a contents 1 - attachment information file 421 and a contents 2 - attachment information file 422. However, the number of the contents attachment information files is not necessarily limited to two, and they can be present in any number under each medium directory.

In the second example described above, the contents information itself is recorded and saved in the contents directory created to record and store the contents information itself. In the third example, however, the contents directory is absent, and the contents information itself is recorded and saved directly under the medium directory 410. In other words, in the third example, a contents 1 - data file 431, a contents 1 - data file 432, ..., a contents 2 - data file 433, and a contents 2 - data file 434 are recorded and stored directly under the medium directory 410. It should be appreciated, however, that this configuration is a mere example, and files recorded and stored directly under the medium directory 410 are not limited to these contents data files, and any number of the contents data files can be recorded and saved therein.

Because the contents of the contents 1 - data file 431, the contents data 1 - data file 432, ..., the contents 2 - data file 433, and the contents 2 - data file 434 are the same as those in the second example described above, descriptions thereof are omitted herein. In addition, as with the second example described above, files recorded and stored directly under the medium directory 410 may be, for example, a contents 1 - data file, a contents 2 - data file, a contents 3 - data file, ..., and a contents N - data file. In such a case, as with the second example described above, contents n - attachment information files (1 ≦ n ≦ N) corresponding to respective contents n - data files (1 ≦ n ≦ N) are recorded and stored in the contents attachment information directory 420.

Further, as with the second example described above, each of the contents n - data files (1 ≦ n ≦ N) may contain any number of contents data files, such as a contents n - data file 1, a contents n data file 2, a contents n - data file 3, ..., and contents n - data file K (1 ≦ K).

Owing to these medium directory, contents attachment information directory, contents directory, contents attachment information file, and contents data file, it is possible to ensure seamless reproduction by ensuring the reproduction sequence of the contents information recorded across plural recording media.

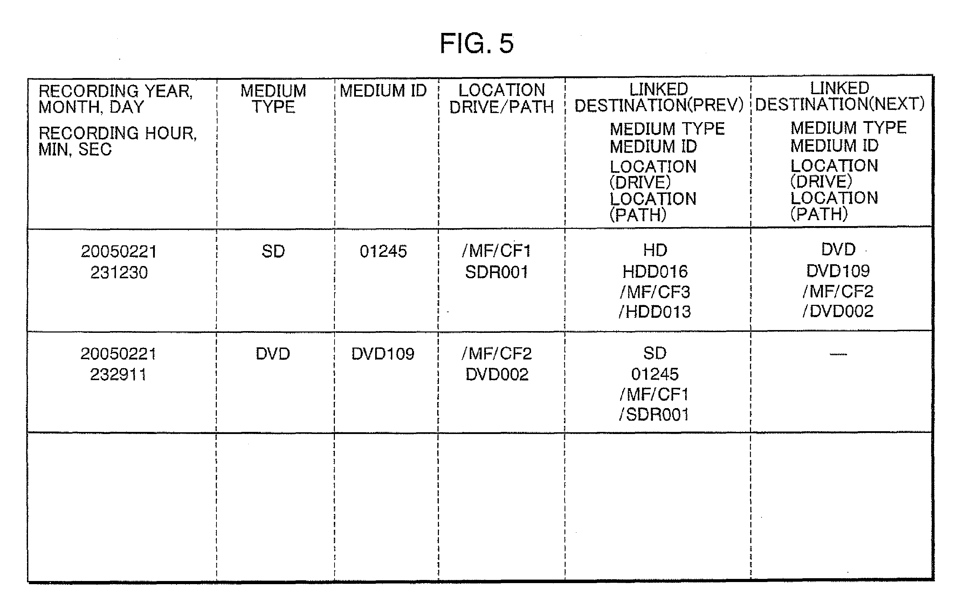

The contents attachment information file will now be described. Fig. 5 is a view showing an example of an all media relevant information integrated management table recorded in the contents attachment information file. The all media relevant information integrated management table is, for example, created in units of Clips of each Shot in each SD card.

Items recorded therein are, for example, relevant information containing recording year, month, and day and recording hour, minute, and second, the type of a recording medium, the medium ID number, the location path where the recording medium is present, information about a linked destination (PREV) where a part preceding Clip of interest is recorded, information about a linked destination (NEXT) where a part succeeding this Clip is recorded, and so forth. It should be appreciated, however, that these items in the all media relevant information integrated management table are a mere example, and items are not limited to the foregoing items.

For example, in the first item of the all media relevant information integrated management table shown in Fig. 5, the relevant information about one Clip recorded in an SD card is recorded. In this relevant information, it is recorded that this Clip was recorded in February 21, 2005 and the recording time was 23 o'clock 12 min 30 sec.

It should be appreciated, however, that this configuration is a mere example, and the information is not limited to the content as above. It may contain information about time on the scale finer than hour, for example, information in units of milliseconds, microseconds, and nanoseconds, or alternatively, it may contain information about the recording start time and the recording end time, or a time length during recording, and so forth.

In, the second item of the all media relevant information integrated management table, the type of the recording media in which this Clip is recorded, for example, an SD card, a BD (Blu-ray Disc), a DVD (Digital Versatile Disc), an HD (Hard Disc), or a type of various recording media other than the foregoing, is recorded. In the first record shown in Fig. 5, information indicating that the type of the recording medium is an SD (SD card) is recorded and in the second record shown in Fig. 5, information indicating that the type of the recording medium is a DVD (Digital Versatile Disc) is recorded.

In the third item of the all media relevant information integrated management table, the medium ID number of the recording medium in which is recorded this Clip is recorded. Although the medium ID number can be of various formats depending on the types of the recording media, it is a unique ID number to identify an individual recording medium.

In the first record shown in Fig. 5, it is recorded that the medium ID number of the recording medium is '01245', and in the second record shown in Fig. 5, it is recorded that the medium ID number of the recording medium is 'DVD109'. The medium ID number may be only one number in the world, and it can also be only one number to the extent that no inconvenience will be caused to the users. Alternatively, it is not necessarily limited to numerals, and as is shown in the example of Fig. 5, it may contain a character (characters).

In the fourth item of the all media relevant information integrated management table, the location of the recording drive where the recording medium in which is recorded this Clip is present, for example, a path or a drive name for an access or management specified by the file system or the OS (Operating System), is recorded. Owing to this information, not only the information recording/reproducing device becomes able to identify the recording drive where the recording medium in which is recorded this Clip is present or loaded, but it also becomes able to access the recording drive and the recording medium. Moreover, it becomes able to manage the recording drive and the recording medium.

In the first record shown in Fig. 5, information indicating that the location-path of the recording drive is '/MF/CF1/SDR001' is recorded. In the second record shown in Fig. 5, information indicating that the location path of the recording drive is /MF/CF2/DVD002' is recorded.

In the fifth item of the all media relevant information integrated management table, information about a linked destination (PREV) where a part preceding this Clip is recorded, is recorded. To be more concrete, in the first record shown in Fig. 5, it is recorded that the medium type of the recording medium in which is recorded a part preceding this Clip is an HD (Hard Disc), the medium ID of the HD is 'HDD016', and the presence path of the recording drive where the recording media is present is '/MF/CF3/HDD013'.

Also, for example, in the second record shown in Fig. 5, it is recorded that the medium type of the recording medium in which is recorded a part preceding this Clip is an SD (SD card), the medium ID of the SD card is '01245', and the location-path of the recording drive where the recording medium is present is '/MF/CF1/SDR001'.

The medium ID and the location-path of the recording drive of the linked destination in the second record are the same as the medium ID and the location path shown in the first record of Fig. 5. It is thus understood that the part preceding the Clip recorded in the second record in the example shown in Fig. 5 is what is recorded in the first record in the example shown in Fig. 5. To rephrase it more specifically, the Clip corresponding to the first record and the Clip corresponding to the second record both recorded in the all medium relevant information integrated management table in the example shown in Fig. 5 are continuous Clips of one Shot.

It should be appreciated, however, that this configuration is a mere example. Clips recorded in the all media relevant information integrated management table are not necessarily recorded in order of continuous Clips of one Shot as in the example above, and they can be recorded in any order.

In the sixth item of the all media relevant information integrated management table, information about a linked destination (NEXT) where a part succeeding this Clip is recorded, is recorded. To be more concrete, for example, in the first record shown in Fig. 5, it is recorded that the medium type of the recording medium in which is recorded the part succeeding this Clip is a DVD (Digital Versatile Disc), the medium ID of the DVD is 'DVD109', and the location-path where the recording medium is present is '/MF/CF2/DVD002'.

The medium ID and the location path of the recording drive of the linked destination in the first record are the same as the medium ID and the location-path shown in the second record of Fig. 5. It is thus understood that the part succeeding this Clip recorded in the first recorded in the example shown in Fig. 5 is what is recorded in the second record in the example shown in Fig. 5. To rephrase it more specifically, the Clip corresponding to the first record and the Clip corresponding to the second record both recorded in the all media relevant information integrated management table shown in Fig. 5 are continuous Clips of one Shot.

It should be appreciated, however, that this configuration is a mere example. Clips recorded in the all media relevant information integrated management table are not necessarily recorded in order of continuous Clips of one Shot as in the example above, and they can be recorded in any order.

Also, for example, in the second record shown in Fig. 5, '-' alone is recorded for the part succeeding this Clip. It indicates that the part succeeding this Clip is absent, nothing has been recorded therein, or it remains unspecified.

In a case where the recording media managed by the all medium relevant information integrated management table are recording media of a removable type, it is generally unexpected that the medium type and the medium ID change with normal use conditions. However, the locations-paths of the recording drives where the recording media are present can change with normal use conditions. Hence, there is a possibility that the locations-paths of the recording drives where the recording media in which are recorded respective Clips are present change with use. Information indicating the latest state is recorded in the all medium relevant information integrated management table, and the information is updated each time the state has changed.

This is not limited to the item of location-drive/path' in the all media relevant information integrated management table, and the same also applies to 'location-drive/path' in the item of linked destination (PREV)' and 'location-drive/path' in the item of 'linked destination (NEXT)'.

In addition, only two Clips are shown in the all media relevant information integrated management table shown in Fig. 5. It should be appreciated, however, that this configuration is a mere example, and information about any number of Clips can be recorded in the all media relevant information integrated management table.

Further, in this example, it has been described that the all media relevant information integrated management table is recorded in the contents attachment information file. It should be appreciated, however, that this configuration is a mere example, and it may be recorded in a recording medium other than the contents attachment information file. It may be recorded in another portion of the information recording/reproducing device, for example, a non-volatile memory, a volatile memory, a ROM, or a RAM. Alternatively, it may be recorded in an external recording medium, or it may be recorded in another computer, for example, a server linked to the network or the like.

As has been described, because the link information contains at least one of the information specifying the type of a first recording medium and information specifying the type of a second recording medium, it is possible to record the contents information across recording media of plural types.

Also, because the link information contains at least one of a medium ID to identify the first recording medium and a medium ID to identify the second recording medium, it is possible to specify the recording medium in which the contents information is recorded with ease.

Further, because the link information contains at least identification information to identify the directory in which the contents information in the first recording medium is recorded and identification information to identify the directory in which the contents information in the second recording medium is recorded, it is possible to specify the directory in which the contents information is recorded with ease.

Furthermore, because the link information contains at least one of identification information to identify the file in which the contents information in the first recording medium is recorded and identification information to identify the file in which the contents information in the second recording medium is recorded, it is possible to specify the file in which the contents information is recorded with ease.

Moreover, because the link information contains at least one of the linked destination information specifying the linked destination of the contents information and linked source information specifying the linked source of the contents information, by referring to the linked destination information, it is possible to reproduce the contents information recorded across plural recording media in a forward direction, whereas by referring to the linked source information, it is possible to reproduce the contents information recorded across plural recording media in an inverse direction.

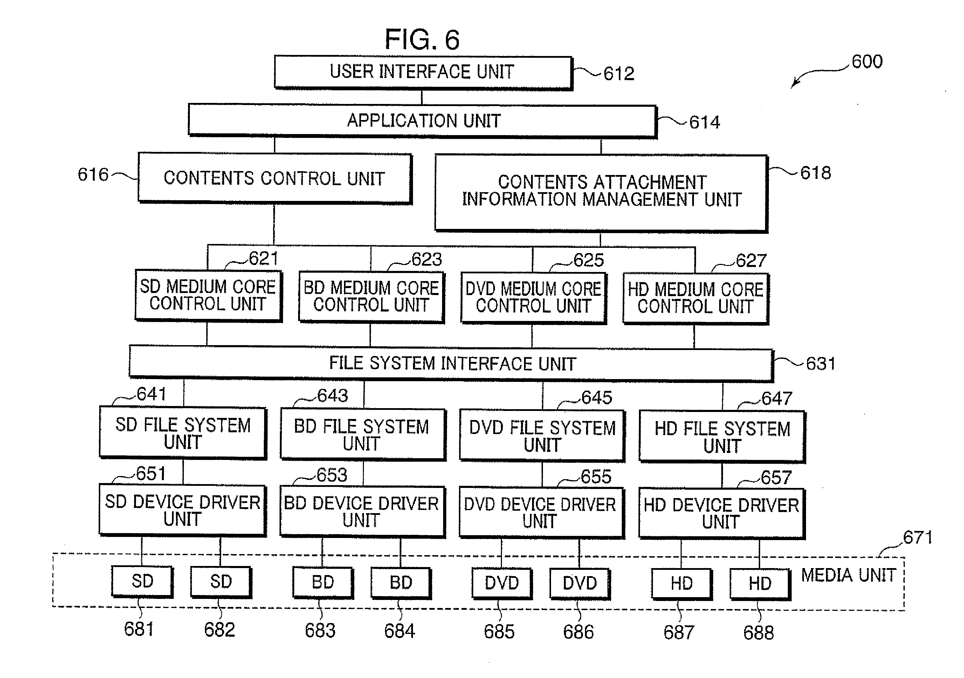

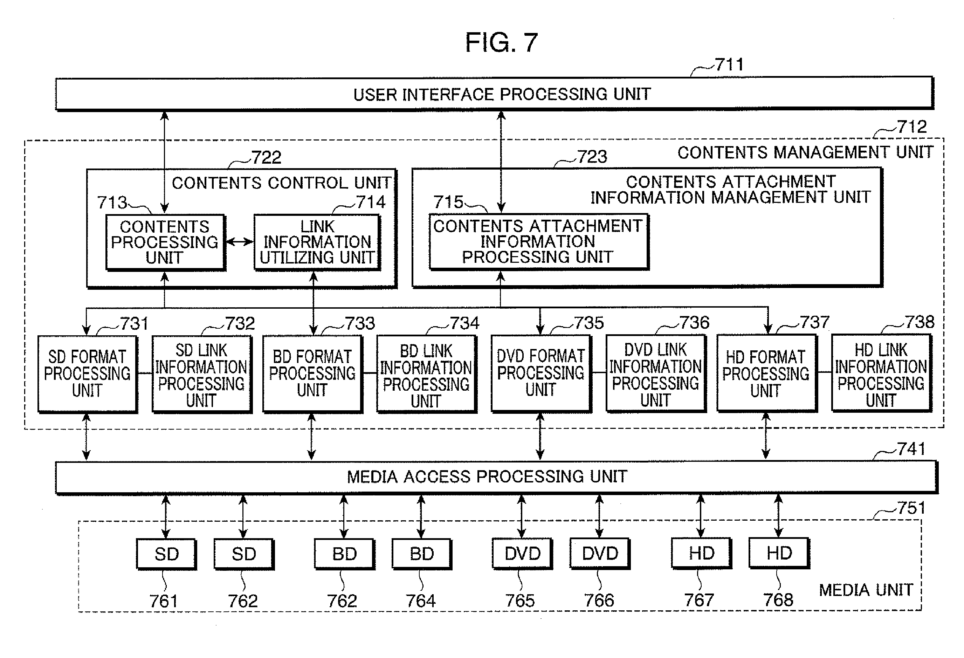

Fig. 6 is a view showing the module configuration of the information recording/reproducing device according to the first embodiment of the invention. Fig. 7 is a view showing the functional block of the information recording/reproducing device according to the first embodiment of the invention.

An information recording/reproducing device 600 shown in Fig. 6 is formed by including a user interface unit 612, an application unit 614, a contents control unit 616, a contents attachment information management unit 618, an SD medium core control unit 621, a BD medium core control unit 623, a DVD medium core control unit 625, an HD medium core control unit 627, a file system-interface unit 631, an SD file system unit 641, a BD file system unit 643, a DVD file system unit 645, an HD file system unit 647, an SD device driver unit 651, a BD device driver unit 653, a DVD device driver unit 655, an HD device driver unit 657, and a media unit 671.

The media unit 671 includes, as various recording media, SD' s (SD cards) 681 and 682, BD's (Blu-ray discs) 683 and 684, DVD's (Digital Versatile Discs) 685 and 686, and HD's (Hard Discs) 687 and 688.

It should be appreciated that the chief module configuration of the information recording/reproducing device 600 as above is a mere example, and the invention is not limited to this configuration. In particular, the kinds and the number of the various device drivers and recording media are not limited to those in the example shown in Fig. 6.

The chief functional block of the information recording/reproducing device 600 shown in Fig. 7 is formed by including a user interface processing unit 711, a contents management unit 712, a media access processing unit 741, and a media unit 751. The contents management unit 712 is formed by including a contents control unit 722, a contents attachment information management unit 723, an SD format processing unit 731, an SD link information processing unit 732, a BD format processing unit 733, a BD link information processing unit 734, a DVD format processing unit 735, a DVD link information processing unit 736, an HD format processing unit 737, and an HD link information processing unit 738.

The contents control unit 722 is formed by including a contents processing unit 713 and a link information utilizing unit 714. The contents attachment information management unit 723 is formed by including a contents attachment information processing unit 715. The media unit 751 includes, as various recording media, SD's (SD cards) 761 and 762, BD's (Blu-ray Discs) 763 and 764, DVD's (Digital Versatile Discs) 765 and 766, and HD's (Hard Discs) 767 and 768.

It should be appreciated that the chief functional block configuration of the information recording/reproducing device 600 as above is a mere example, and the invention is not limited to this configuration. In particular, the kinds and the number of various format processing units, link information processing units, and recording media are not limited to those in the example shown in Fig. 7.

The user interface unit 612 of Fig. 6 corresponds to the user interface processing unit 711 of Fig. 7. The user interface unit 612 detects an operation when the user uses the information recording/reproducing device 600, for example, an input using an operation button, and operates in a manner corresponding to the input. Also, the user interface unit 612 displays an output corresponding to an operation by the user on a liquid crystal display device or outputs it from a sound output device.

The application unit 614 of Fig. 6 corresponds to part of the contents management unit 712 of Fig. 7. The application unit 614 is controlled by an application program. The application unit 614 receives operation input information from the user interface unit 612, and transmits control signals corresponding to a request to record information of various kinds, a request to reproduce information of various kinds, a request to edit information of various kinds to other modules while receiving control signals corresponding to replies from the other modules.

The contents control unit 616 of Fig. 6 corresponds to the contents control unit 722 of Fig. 7. The contents control unit 616 controls contents information, for example, stream control and file control, according to a control signal from the application unit 614. Also, the contents control unit 616 outputs contents information done with the stream control or the file control to medium core control units 621 through 627 corresponding to recording media of the respective types.

The control of the contents information is divided, as is shown in Fig. 7, to processing on the contents themselves performed by the contents processing unit 713 and processing using link information of the contents performed by the link information utilizing unit 714.

The processing using link information of the contents means processing in which, for example, the all media relevant information integrated management table recorded in the contents attachment information file is read out to analyze the content thereof, so that the contents themselves are read out by following the link information as described above. This corresponds part of the processing to ensure seamless reproduction by ensuring the reproduction sequence of the contents information recorded across plural recording media. The contents attachment information file in this embodiment is recorded in at least one recording medium in the media unit 751.

The contents attachment information management unit 618 of Fig. 6 corresponds to the contents attachment information management unit 723 of Fig. 7. The contents attachment information management unit 618 manages the all media relevant information integrated management table according to a control signal from the application unit 614.

The media unit 751 of Fig. 7 has stored contents link information (contents attachment information file). The media unit 751 has recorded the contents attachment information file as described above. It should appreciated however, that this configuration is a mere example, and the media unit 751 may be another portion of the information recording/reproducing device of the invention, for example, a non-volatile memory, a volatile memory, a ROM, or a RAM, or alternatively, it may be an external recording medium or another computer, for example, a server or the like linked to the network.

Processing on the contents link information, which is one processing performed by the contents attachment information management unit 618, is also the processing in which, for example, the all media relevant information integrated management table recorded in the contents attachment information file is read out to analyze the content thereof, so that the contents themselves are read out by following the link information as described above. This corresponds to part of the processing to ensure seamless reproduction by ensuring the reproduction sequence of the contents information recorded across plural recording media.

The SD medium core control unit 621 of Fig. 6 corresponds to the SD format processing unit 731 and the SD link information processing unit 732 of Fig. 7. The BD medium core control unit 623 corresponds to the BD format processing unit 733 and the BD link information processing unit 734. The DVD medium core control unit 625 corresponds to the DVD format processing unit 735 and the DVD link information processing unit 736. The HD medium core control unit 627 corresponds to the HD format processing unit 737 and the HD link information processing unit 738.

For the SD cards, the BD' s (Blu-ray Discs), the DVD's (Digital Versatile Discs), the HD' s (Hard Discs), and so forth as an example of the recording media loaded in the information recording/reproducing device 600, the recording formats standardized for their own have been set. Hence, the contents management information including the contents information and the link information has to be recorded according to these standardized recording formats.

The SD format processing unit 731, the BD format processing unit 733, the DVD format processing unit 735, and the HD format processing unit 737 perform processing to enable the recording according to the respective standardized recording formats. The SD link information processing unit 732, the BD link information processing unit 734, the DVD link information processing unit 736, and the HD link information processing unit 738 perform processing needed to follow or manage and update the link information in correlation with the various recording formats.

Because the processing as described above is necessary for each recording medium, these units are present to correspond to the respective recording media, that is, in the example shown herein, to correspond to the SD cards, the BD' s (Blu-ray Discs), the DVD' s (Digital Versatile Discs), and HD's (Hard Discs).

As has been described, because these recording media are a mere example, when the recording medium increase in number or a new recording medium is added, the medium core control unit, that is, the format processing unit and the link information processing unit for a newly added recording medium are required and these have to be provided additionally.

Conversely, as long as the medium core control unit, that is, the format processing unit and the link information processing unit for a new recording medium are added, it is possible to newly add any type of recording media to the information recording/reproducing device 600. More importantly, it is possible to record the content information across the new recording media and the existing recording media. Further, seamless reproduction can be ensured by ensuring the reproduction sequence of the contents information recorded across any type of newly added recording media and the existing recording media. This is one of the major characteristics of the invention.

The file system-interface unit 631, the SD file system unit 641, the SD device driver unit 651, the BD file system unit 643, the BD device driver unit 653, the DVD file system unit 645, the DVD device driver unit 655, the HD file system unit 647, and the HD device driver unit 657 of Fig. 6 correspond to the media access processing unit 741 of Fig. 7.

To describe it in terms of functions, all these modules are to perform processing to access the respective recording media, and the file system interface unit 631 functions between the respective medium core control units and the file system units of the respective recording media for data transfer.

Each of the SD file system unit 641, the BD file system unit 643, the DVD file system unit 645, and the HD file system unit 647 is equivalent to file system management software corresponding to the respective recording media that is used normally in existing PC's (Personal Computers). Also, each of the SD device driver unit 651, the BD device driver unit 653, the DVD device driver unit 655, and the HD device driver unit 657 is equivalent to device driver software corresponding to the respective recording media. These are portions corresponding to device drivers that record contents information according to the file systems in compliance with the standards set for each recording medium.

It should be noted, however, that when new recording media are added, it is necessary to additionally provide the file system unit and the device driver unit for these recording media. Conversely, as long as these file system unit and device driver unit are provided additionally, it is possible to newly add any type of recording media to the information recording/reproducing device 600. More importantly, it is possible to record the content information across the new recording media and the existing recording media. Further, seamless reproduction can be ensured by ensuring the reproduction sequence of the contents information recorded across any type of newly added recording media and the existing recording media. This is one of the major characteristics of the invention.

In this embodiment, the contents control unit 616 corresponds to an example of the contents information recording unit and the contents information recording control unit, the contents attachment information management unit 618 corresponding to an example of the link information recording unit and the link information recording control unit, the contents attachment information management unit 618 corresponds to an example of the link information read unit, the contents control unit 616 corresponds to an example of the reproduction unit, the contents attachment information management unit 618 corresponds to an example of the contents information deletion unit, the contents attachment information management unit 618 corresponds to an example of the link information read unit, the contents attachment information management unit 618 corresponds to an example of the link information deletion unit, and the user interface unit 612 corresponds to an example of the display unit.

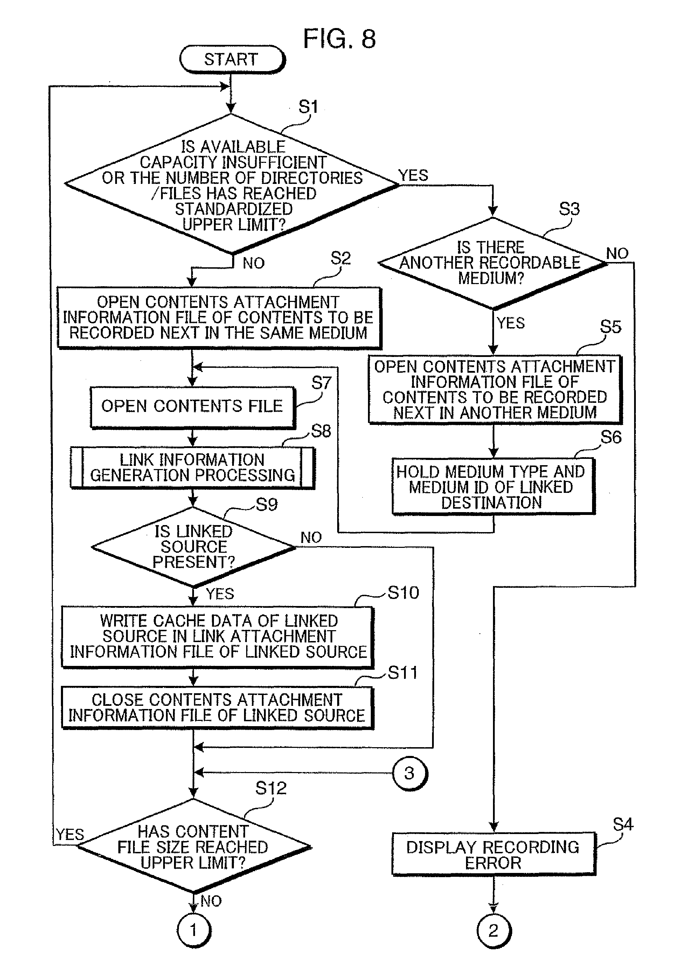

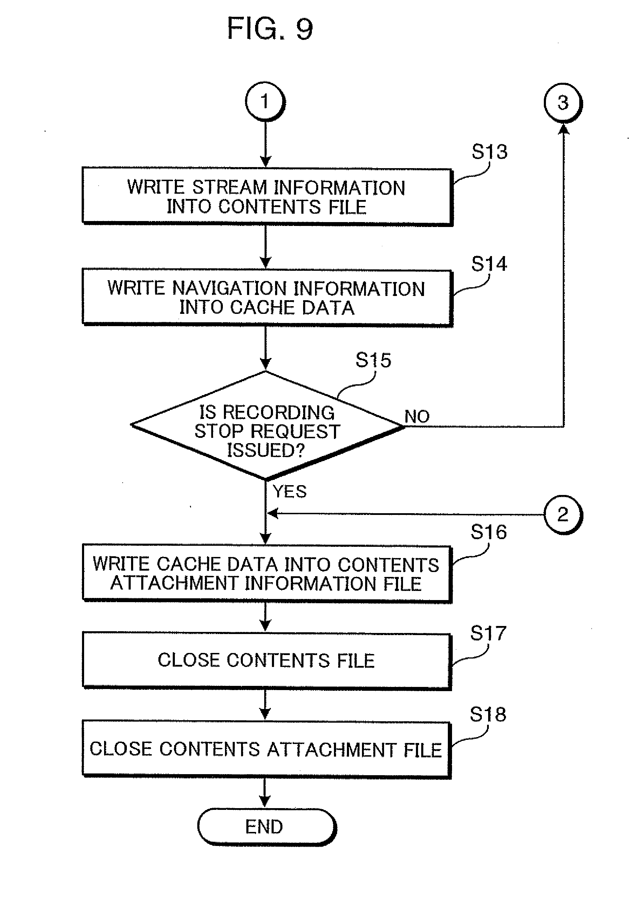

An operation of the information recording/reproducing device according to the first embodiment of the invention will now be described. Recording processing to record the contents information into recording media will be described first. Fig. 8 and Fig. 9 are flowcharts used to describe the recording processing in the information recording/reproducing device shown in Fig. 6.

Initially, in Step S1 the contents control unit 616 acquires an available capacity, the number of directories, and the number of files of a recording medium that is to be used for the recording, and determines whether the available capacity of the recording medium is insufficient, or whether the number of directories and the number of files of the recording medium exceed the upper limit numbers standardized in advance for this recording medium. In a case where it is determined that the available capacity of the recording medium is not insufficient, or in a case where the number of directories and the number of files do not exceed the standardized upper limit numbers (NO in Step S1), in Step S2, the contents attachment information management unit 618 opens the contents attachment information file corresponding to the contents information that will be recorded in the same recording medium.

Meanwhile, in a case where it is determined that the available capacity of the recording medium is insufficient, or the number of directories and the number of files exceed the standardized upper limit number (YES in Step S1), in Step S3, the contents attachment information management unit 618 determines whether there is any other recordable recoding medium. In a case where it is determined that there is not any other recordable recording medium (NO in Step S3); in Step S4, the contents attachment information management unit 618 outputs a recording error notice informing that the contents information cannot be recorded to the user interface unit 612. The user interface unit 612 then displays a recording error screen on the display device to notify the user that the contents information cannot be recorded in recording media.

In a case where it is determined that there is another recordable recording medium (YES in Step S3), in Step S5, the contents attachment information management unit 618 opens the contents attachment information file corresponding to the contents information that will be recorded into another recording medium.

Subsequently, in Step S6, the contents attachment information management unit 618 acquires the medium type and the medium ID of the linked destination and stores them in its internal memory. In this embodiment, the medium type and the medium ID of the linked destination are stored in the internal memory. However, the invention is not particularly limited to this configuration, and the contents ID to identify the contents may be acquired to be stored in the internal memory in addition to the medium type and the medium ID.

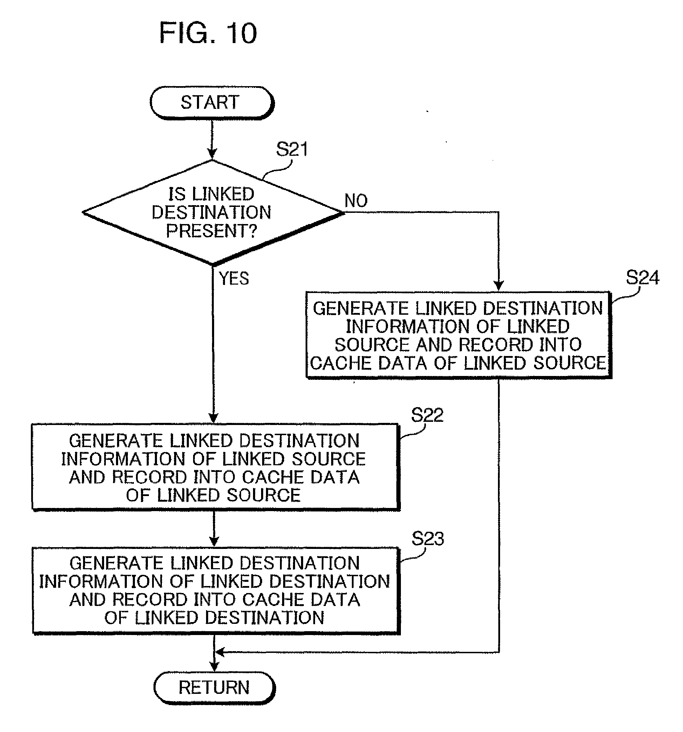

Subsequently, in Step S7, the contents control unit 616 opens the contents file into which the contents information will be stored. Subsequently, in Step S8, the contents attachment information management unit 618 executes link information generation processing to generate link information. The link information generation processing will now be described. Fig. 10 is a flowchart used to describe the link information generation processing in Step S8 of Fig. 8.

In Step S21, the contents attachment information management unit 618 determines whether a linked destination is present. In other words, the contents attachment information management portion 618 determines whether the media type and the medium ID of a linked destination are stored. In a case where the medium type and the medium ID of the linked destination are stored, it is determined that the linked destination is present. In a case where the medium type and the medium ID of the linked destination are not stored, it is determined that the linked destination is absent.

In a case where the presence of the linked destination is determined (YES in Step S21), in Step S22, the contents attachment information management unit 618 generates the linked destination information contained in the contents attachment information of the linked source, and temporarily stores the linked destination information thus generated into cache data for the contents attachment information file of the linked source. To be more concrete, the contents attachment information management unit 618 stores the medium type and the medium ID of the linked destination in the cache data for the contents attachment information file of the linked source as the linked destination (NEXT).

Subsequently, in Step S23, the contents attachment information management unit 618 generates the linked destination information and the linked source information contained in the contents attachment information of the linked destination, and temporarily stores the linked destination information and the linked source information thus generated into cache data for the contents attachment information file of the linked destination. To be more concrete, the contents attachment information management unit 618 stores the medium type and the medium ID of the linked source in the cache data for the contents attachment information file of the linked destination as the linked source (PREV). Also, the contents attachment information management unit 618 stores a value, 'NULL', in the cache data for the contents attachment information file of the linked destination as the linked destination (NEXT).

Meanwhile, in a case where the absence of the linked destination is determined (NO in Step S21), in Step S24, the contents attachment information management unit 618 generates the linked destination information contained in the contents attachment information of the linked source, and temporarily stores the linked destination information thus generated in the cache data for the contents attachment information file of the linked source. Herein, because the contents information is not recorded across plural recording media, 'NULL' is stored in the cache data for the contents attachment information file of the linked source for both the linked destination (NEXT) and the linked destination (PREV).

Referring to Fig. 8 again, in Step S9, the contents attachment information management unit 618 determines whether a linked source is present. In a case where the absence of the linked source is determined (NO in Step S9), the flow proceeds to the processing in Step S12. Meanwhile, in a case where the presence of a linked source is determined (YES in Step S9), in Step S10, the contents attachment information management unit 618 writes the linked destination information temporarily stored in the cache data for the contents attachment information file of the linked source into the contents attachment information file of the linked source. Subsequently, in Step S11, the contents attachment information management unit 618 closes the contents attachment information file of the linked source.

Subsequently, in Step S12, the contents control unit 616 determines whether the size of the contents file has reached the pre-set upper limit value. Herein, in a case where it is determined that the size of the contents file has reached the upper limit value (YES in Step S12), the flow returns to the processing in Step S1. In this embodiment, the upper limit value of the size (capacity) of one contents file is pre-set by the file system, such as FAT 16 and FAT 32. Hence, when the size of the contents file has reached the upper limit value, the flow returns to the processing in Step 1 to generate a new contents file. There may be a case where the upper limit value of the file size of the contents is not set in some file systems (for example, UDF 2.5 or the like). In this case, the processing in Step S12 may be omitted or an arbitrary upper limit value may be set.

In a case where it is determined that the size of the contents file has not reached the upper limit value (NO in Step S12), in Step S13, the contents control unit 616 writes stream information in the contents file. Subsequently, in Step S14, the contents attachment information management unit 618 writes navigation information specifying the recording position of the contents information in the recording medium into the cache data for the contents attachment information file of the linked source or the linked destination. Herein, in a case where the presence of the linked source is determined in Step S9 and the contents attachment information file of the linked source is closed, the navigation information is written into the cache data for the contents attachment information file of the linked destination. In a case where the absence of the linked source is determined in Step S9 and the contents attachment information file of the linked source is not closed, the navigation information is written into the cache data for the contents attachment information file of the linked source.

Subsequently, in Step S15, the contents control unit 616 determines whether a recording stop request is inputted from the application unit 614. Herein, in a case where it is determined that no recording stop request is inputted (NO in Step S15), the flow returns to the processing in Step S12 in which the contents control unit 616 determines whether the size of the contents file has reached the pre-set upper limit value. Thereafter, the processing from Step S12 through Step S15 is executed repetitively until it is determined that the size of the contents file has reached the upper limit value or until a recording stop request is inputted.

In a case where a recording stop request is inputted (YES in Step S15), in Step S16, the contents attachment information management unit 618 writes the cache data for the contents attachment information file of the linked source or the linked destination into the contents attachment information file of the linked source or the linked destination, respectively. Herein, in a case where the presence of the linked source is determined in Step S9 and the contents attachment information file of the linked source is closed, the cache data for the contents attachment information file of the linked destination is written into the contents attachment information file of the linked destination. In a case where the absence of the linked source is determined in Step S9 and the contents attachment information file of the linked source is not closed, the cache data for the contents attachment information file of the linked source is written into the contents attachment information file of the linked source.

Subsequently, in Step S17, the contents control unit 616 closes the contents file that is in the middle of a recording operation. Subsequently, in Step S18, the contents attachment information management unit 618 closes the contents attachment information file of the linked source or the linked destination and ends the recording processing. Herein, in a case where the presence of the linked source is determined in Step S9 and the contents attachment information file of the linked source is closed, the contents attachment information file of the linked destination is closed. In a case where the absence of the linked source is determined in Step S9 and the contents attachment information file of the linked source is not closed, the contents attachment information file of the linked source is closed.

As has been described, a part of the contents information is recorded in a first recording medium and the rest part of the contents information is recorded in a second recording medium different from the first recording medium. The link information indicating that the part of the contents information recorded in the first recording medium is continuous with the rest part of the recorded in the second recording medium is generated. The link information thus generated is recorded into at least one of the first recording medium and the second recording medium. In this instance, the link information is recorded into a file different from the file in which the contents information is recorded.

Hence, because the link information indicating that the part of the contents information recorded in the first recording medium is continuous with the rest part recorded in the second recording medium is recorded into at least one of the first recording medium and the second recording medium, it is possible to record a single entity of contents information across plural recording media. Further, seamless reproduction is enabled by ensuring the reproduction sequence.

In a case where there is more than one area where the rest part of the contents information is recorded, it may be configured in such a manner that link information indicating that the part of the contents information recorded in the first recording medium is continuous with the respective areas recorded in the second recording medium is generated, and the link information thus generated is recorded into at least one of the first recording medium and the second recording medium. In this case, even when the contents information is divided into plural segments and recorded in the second recording medium, the reproduction sequence among these segments can be ensured.

Also, in this embodiment, a single entity of contents information is recorded across plural recording media. The invention, however, is not particularly limited to this configuration, and a single entity of contents information may be recorded across plural files or plural directories.

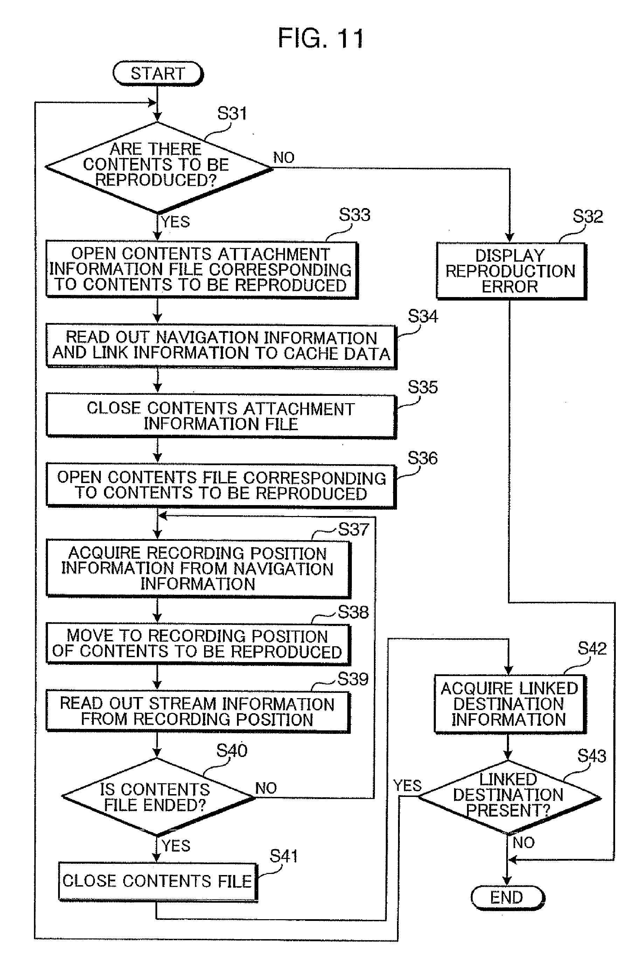

Reproduction processing to reproduce the contents information from the recording media will now be described. Fig. 11 is a flowchart used to describe the recording processing of the contents information in the information recording/reproducing device shown in Fig. 6. Herein, the reproduction processing described below is the processing to reproduce one Shot of contents information.

Initially, in Step S31, the contents control unit 616 determines whether the contents to be reproduced are recorded in recording media. It should be noted that the user interface unit 612 accepts a specification of the contents to be reproduced from the user through the input device. Herein, in a case where it is determined that the contents to be reproduced are not recorded in the recording media (NO in Step S31), in Step S32, the contents control unit 616 outputs a reproduction error notice informing that the contents information cannot be reproduced to the user interface unit 612. The user interface unit 612 then displays a reproduction error screen on the display device to notify the user that the specified contents cannot be reproduced.

Meanwhile, in a case where it is determined that the contents to be reproduced are recorded in recording media (YES in Step S31), in Step 533, the contents attachment information management unit 618 opens the contents attachment information file corresponding to the contents to be reproduced.

Subsequently, in Step S34, the contents attachment information management unit 618 reads out the navigation information and the link information stored in the contents attachment information file into the cache data for the contents attachment information file. Subsequently, in Step S35, the contents attachment information management unit 618 closes the contents attachment information file.

Subsequently, in Step S36, the contents control unit 616 opens the contents file corresponding to the contents to be reproduced. Subsequently, in Step S37, the contents control unit 616 acquires the recording position of the contents to be reproduced from the navigation information contained in the cache data for the contents attachment information file.

Subsequently, in Step S38, the contents control unit 616 issues an instruction for the device driver unit to move to the recording position of the contents to be reproduced. Subsequently, in Step S39, the contents control unit 616 reads out the stream information from the recording position of the contents file and reproduces the contents information.

Subsequently, in Step S40, the contents control unit 616 determines whether the reading out of the stream information from the contents file has ended. Herein, in a case where it is determined that the reading out of the stream information has not ended (NO in Step S40), the flow returns to the processing in Step S37, and the stream information is read out continuously.

Meanwhile, in a case where the reading out of the stream information has ended (YES in Step S40), in Step S41, the contents control unit 616 closes the contents file. Subsequently, in Step S42, the contents attachment information management unit 618 acquires the linked destination information from the link information contained in the cache data for the contents attachment information file.

Subsequently, in Step S43, the contents attachment information management unit 618 determines whether a linked destination is present. Herein, in a case where the presence of the linked destination is determined (YES in Step S43), the flow returns to the processing in Step S31, and whether the contents to be reproduced are recorded in the recording medium specified in the linked destination information is determined. Meanwhile, in a case where the absence of the linked destination is determined (NO in Step S43), the reproduction processing is ended.

As has been described, the link information is read out, so that the contents information is read out from the first recording medium and reproduced, while the contents information is read out from the second recording medium and reproduced according to the link information thus read out. Hence, by referring to the recorded link information, it is possible to reproduce the contents information recorded across plural recording media seamlessly.

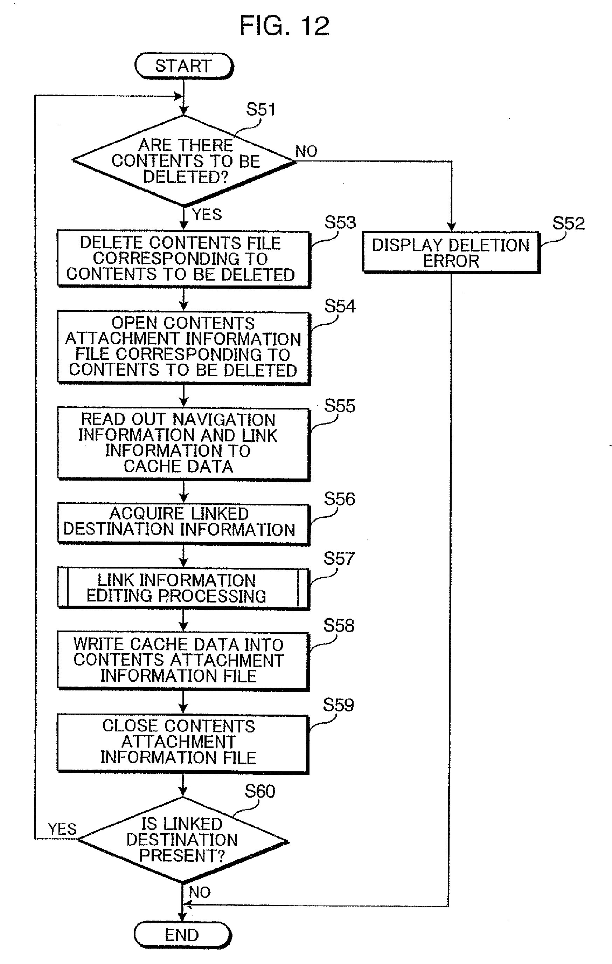

Editing processing to edit contents information recorded in recording media will now be described. Fig. 12 is a flowchart used to describe the editing processing of the contents information in the information recording/reproducing device shown in Fig. 6. The editing processing described below is the processing to delete one Shot of contents information.

Initially in Step S51, the contents management unit 616 determines whether contents to be deleted are recorded in recording media. It should be noted that the user interface unit 612 accepts a specification of the contents to be deleted from the user through the input device. Herein, in a case where it is determined that the contents to be deleted are not recorded in the recording media (NO in Step S51), in Step S52, the contents control unit 616 outputs a deletion error notice informing that the contents information cannot be deleted to the user interface unit 612. The user interface unit 612 then displays a deletion error screen on the display device and notifies the user that the specified contents cannot be deleted.

Meanwhile, in a case where it is determined that the contents to be deleted are recorded in the recording media (YES in Step S51), in Step S53, the contents control unit 616 deletes the contents file corresponding to the contents to be deleted. Subsequently, in Step S54, the contents attachment information management unit 618 opens the contents attachment information file corresponding to the contents to be deleted.

Subsequently, in Step S55, the contents attachment information management unit 618 reads out the navigation information and the link information stored in the contents attachment information file to the cache data for the contents attachment information file. Subsequently, in Step S56, the contents attachment information management unit 618 acquires the linked destination information from the link information contained in the cache data for the contents attachment information file. It should be noted that the linked destination information thus acquired is stored in an area different from the one for the cache data.

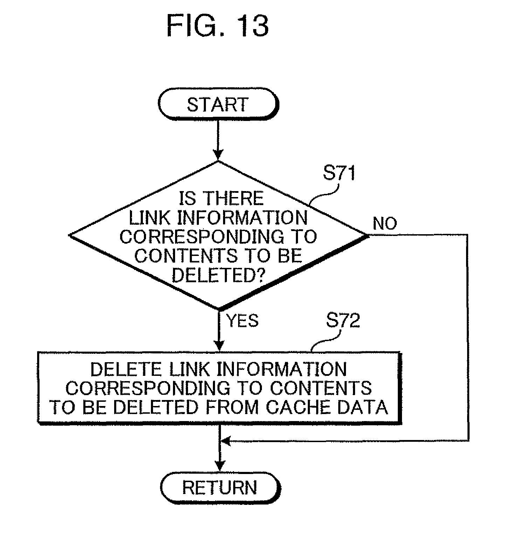

Subsequently, in Step S57, the contents attachment information management unit 618 executes link information editing processing to edit the link information. The link information editing processing will now be described. Fig. 13 is a flowchart used to describe the link information editing processing in Step S57 of Fig. 12.

In Step S71, the contents attachment information management unit 618 determines whether there is link information corresponding to the contents to be deleted. Herein, in a case where there is no link information corresponding to the contents to be deleted (NO in Step S71), the link information editing processing is ended. Meanwhile, in a case where it is determined that there is the link information corresponding to the contents to be deleted (YES in Step S71), in Step S72, the contents attachment information management unit 618 deletes the linked destination information corresponding to the contents to be deleted and ends the link information editing processing.

Referring to Fig. 12 again, in Step S58, the contents attachment information management unit 618 writes the cache data for the contents attachment information file in the contents attachment information file. Subsequently, in Step S59, the contents attachment information management unit 618 closes the contents attachment information file.

Subsequently, in Step S60, the contents attachment information management unit 618 refers to the linked destination information acquired in Step S56, and determines whether a linked destination for the contents to be deleted is present. Herein, in a case where the presence of the linked destination is determined (YES in Step S60), the flow returns to the processing in Step S51, and whether the contents to be deleted are recorded in the recording medium specified in the linked destination information. Meanwhile, in a case where the absence of the linked destination is determined (NO in Step S60), the editing processing is ended.

As has been described, the contents information is deleted from a first recording medium and the link information is read out, so that the link information corresponding to the deleted contents information is deleted. The contents information is then deleted from a second recording medium, which is the linked destination of the contents information according to the link information that has been read out. Hence, even in a case where the contents information is deleted, it is possible to reflect the deletion of the contents information on the link information. It is thus possible to edit the contents information recorded across plural recording media with ease.

### (Second Information)

A second embodiment of the invention will now be described. It should be noted, however, that because the second embodiment of the invention is the same as the first embodiment of the invention in many respects, descriptions are omitted for the portions same as those of the first embodiment of the invention and only different portions will be described. Hence, all the portions that will not be described in the second embodiment of the invention are the same as their counterparts in the first embodiment of the invention.

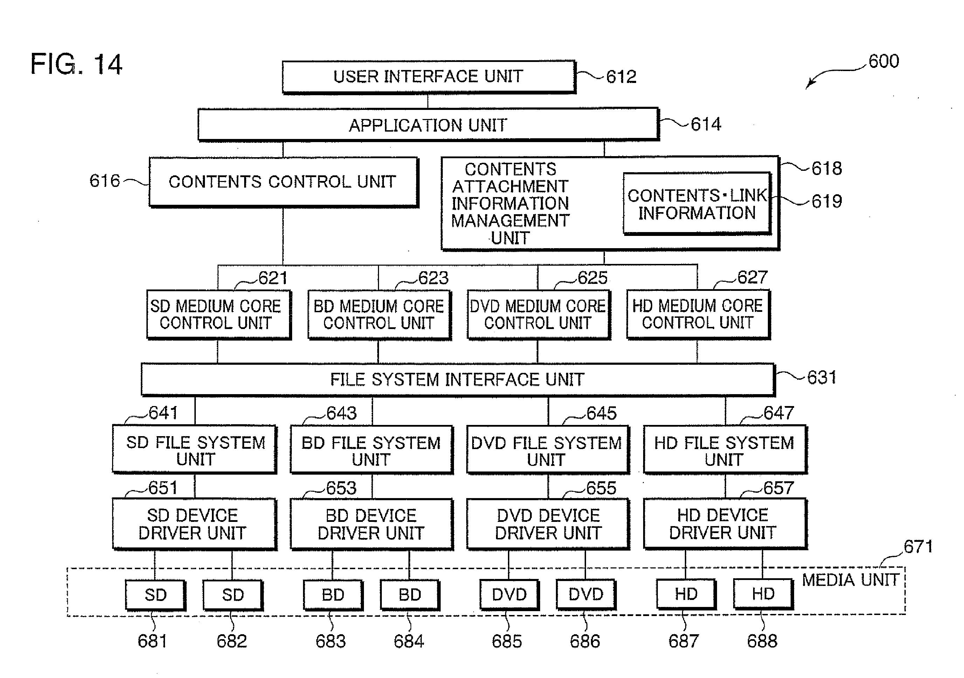

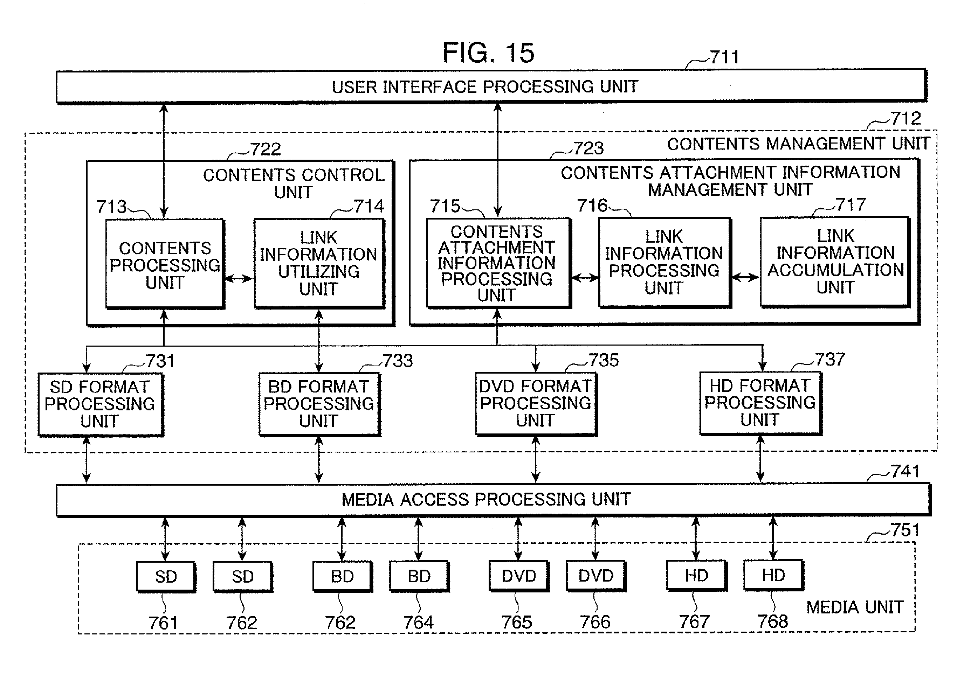

Fig. 14 is a view showing the module configuration of an information recording/reproducing device according to the second embodiment of the invention. Fig. 15 is a view showing the functional block of the information recording/reproducing device according to the second embodiment of the invention.

Referring to Fig. 14, a different point from Fig. 6 is that the contents attachment information management unit 618 has stored the contents link information. Also, referring to Fig. 15, different points from Fig. 7 are that the contents attachment information management unit 723 further includes a link information processing unit 716 and a link information accumulation unit 717, and that the SD link information processing unit 732, the BD link information processing unit 734, the DVD link information processing unit 736, and the HD link information processing unit 738 are omitted from the contents management unit 712.

The contents attachment information management unit 618 of Fig. 14 corresponds to the contents attachment information management unit 723 of Fig. 15. The contents attachment information management unit 618 manages the all media relevant information integrated management table according to a control signal from the application unit 614 . The all media relevant information integrated management table corresponds to the contents link information 619 of Fig. 14.

The link information accumulation unit 717 of Fig. 15 has stored the contents·link information 619. The link information processing unit 716 reads out the contents·link information 619 from the link information accumulation unit 717 and performs processing to follow the link. Also, the link information accumulation unit 717 corresponds, for example, to the contents attachment information file as described above. It should be appreciated, however, that this configuration is a mere example, and the link information accumulation unit 717 may be a recording medium other than the contents attachment information file, or another portion of the information recording/reproducing device of the invention, for example, a non-volatile memory, a volatile memory, a ROM, or a RAM, or alternatively, it may be an external recording medium or another computer, for example, a server or the like linked to the network.

As has been described, because the contents attachment information file is recorded in the link information accumulation unit 717 different from the media unit 751, the contents attachment information file is not recorded together with the contents data file. It is thus possible to read out a contents attachment information file alone individually for use. In addition, because the contents attachment information file is not recorded in the media unit 751 where the contents data file is recorded, it is possible to increase the recording capacity of the contents data file.

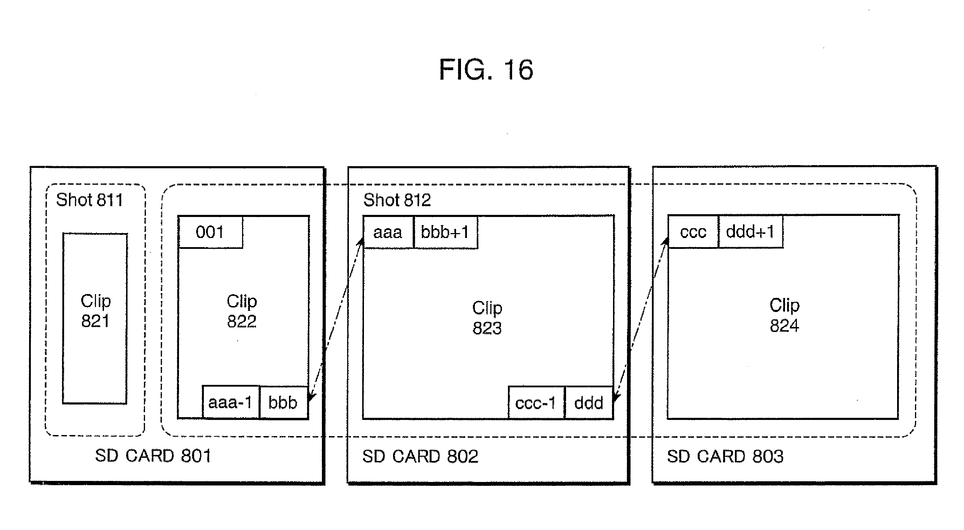

Fig. 16 is a conceptual view showing a state where contents information is recorded across plural information recording media in the information recording/reproducing device according to the second embodiment of the invention. To be more concrete, in Fig. 16, Shot 811 and Shot 812 are recorded across an SD card 801, an SD card 802, and an SD card 803.

In the example shown in Fig. 16, Shot 811 is recorded in the SD card 801 alone without being recorded across plural recording media. On the contrary, Shot 812 is recorded across three recording media, that is, the SD card 801, the SD card 802, and the SD card 803. In the second embodiment of the invention, link information from a part of Shot 812 recorded in the SD card 801, that is, Clip 822, to another part of Shot 812 recorded in the SD card 802, that is, Clip 823, is recorded at the end of Clip 822. The information is, for example, 'bbb' shown in Fig. 16.

Likewise, link information in an inverse direction from the part of Shot 812 recorded in the SD card 802, that is, Clip 823, to the part of Shot 812 recorded in the SD card 801, that is, Clip 822, is recorded at the head of Clip 823. The information is, for example, 'aaa' shown in Fig. 16.

In this embodiment, the link information is recorded at the end of Clip 822 and at the head of Clip 823. It should be appreciated, however, that this configuration is a mere example, and the information is not necessarily recorded at the head or the end, and it can be recorded at any given position.

As can be understood from 'bbb + 1' indicated in the second block of Clip 823, the link information 'bbb' described above represents the position information of the first block of Clip 823. In other words, by recording the position information of the first block of Clip 823 in the last block of Clip 822, a link from Clip 822 to Clip 823 is enabled.

Likewise, as can be understood from 'aaa - 1' indicated in the second block from the last of Clip 822, the link information 'aaa' represents the position information of the last block of Clip 822. In other words, by recording the position information of the last block of Clip 822 in the first block of Clip 823, a link in an inverse direction from Clip 823 to Clip 822 is enabled.

Likewise, link information from the part of Shot 812 recorded in the SD card 802, that is, Clip 823, to still another part of Shot 812 recorded in the SD card 803, that is, Clip 824, is recorded at the end of Clip 823. The information is, for example, 'ddd' shown in Fig. 16.

Likewise, link information in an inverse direction from the part of Shot 812 recorded in the SD card 803, that is, Clip 824, to the part of Shot 812 recorded in the SD card 802, that is, Clip 823, is recorded at the head of Clip 823. The information is, for example, 'ccc' shown in Fig. 16.

In this embodiment, the link information is recorded at the end of Clip 823 and at the head of Clip 824. It should be appreciated, however, that this configuration is a mere example, and the link information is not necessarily recorded at the head or the end, and it can be recorded at any given position.

As can be understood from 'ddd + 1' indicated in the second block of Clip 824, the link information 'ddd' described above represents the position information of the first block of Clip 824. That is to say, by recording the position information of the first block of Clip 824 in the last block of Clip 823, a link from Clip 823 to Clip 824 is enabled.

Likewise, as can be understood from 'ccc - 1' indicated in the second block from the last of Clip 823, the link information 'ccc' described above represents the position information of the last block of Clip 823. In other words, by recording the position information of the last block of Clip 823 in the first block of Clip 824, a link in an inverse direction from Clip 824 to Clip 823 is enabled.

As has been described, a part of the contents information is recorded in a first recording medium and the rest part of the contents information is recorded in a second recording medium different from the first recording medium. The link information indicating that the part of the contents information recorded in the first recording medium is continuous with the rest part of the contents information recorded in the second recording medium is generated, and the link information thus generated is recorded in the part of the contents information recorded in the first recording medium and the rest part of the contents information recorded in the second recording medium.

Hence, there is no need to hold the link information separately and it is possible to reproduce the rest part of the contents information recorded in the second recording medium while reproducing the part of the contents information recorded in the first recording medium.

Also, because the end portion of the contents information recorded in the first recording medium and the head portion of the contents information recorded in the second recording medium are recorded by being replaced with each other, it is possible to reproduce the rest part of the contents information recorded in the second recording medium by detecting the link to the second recording medium while reproducing the part of the contents information recorded in the first recording medium.

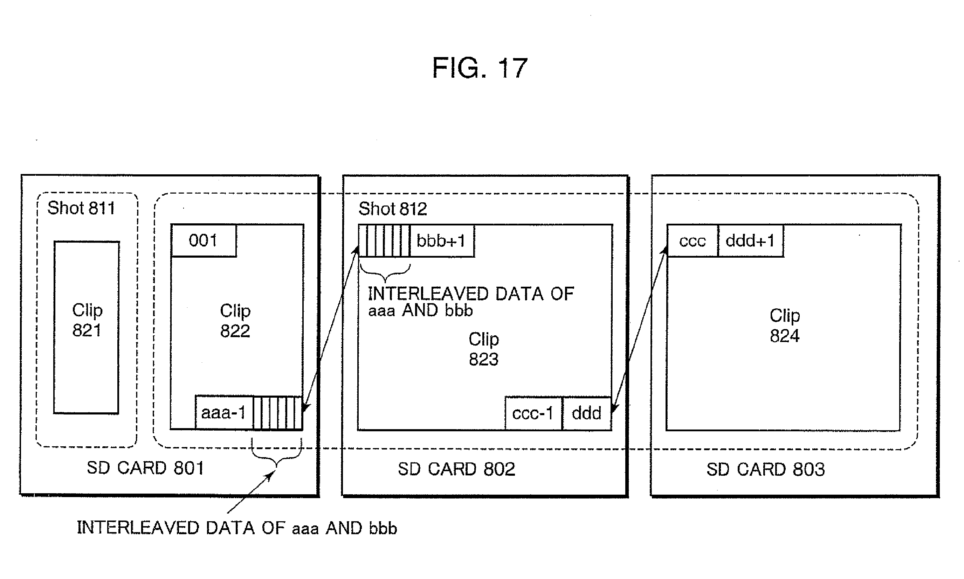

Fig. 17 is a conceptual view of another example showing a state where contents information is recorded across plural information recording media in the information recording/reproducing device according to the second embodiment of the invention.

In the another example shown in Fig. 17, as with the example shown in Fig. 16 described above, Shot 811 is recorded in the SD card 801 alone without being recorded across plural recording media. Also, as with the example shown in Fig. 16 described above, Shot 812 is recorded across three recording media, that is, the SD card 801, the SD card 802, and the SD card 843.

Also, as with the example shown in Fig. 16, in the another example shown in Fig. 17, link information from a part of Shot 812 recorded in the SD card 801, that is, Clip 822, to another part of Shot 812 recorded in the SD card 802, that is, Clip 823, is recorded at the end of Clip 822.

Likewise, as with the example shown in Fig. 16 described above, link information in an inverse direction from the part of Shot 812 recorded in the SD card 802, that is, Clip 823, to the part of Shot 812 recorded in the SD card 801, that is. Clip 822, is recorded at the head of Clip 823.

In the another example shown in Fig. 17, however, the link information from Clip 822 to Clip 823 is not merely recorded at the end of Clip 822. Information in an interleaved form of the contents information contained in 'aaa' as the last block of Clip 822 and the contents information contained in 'bbb' as the first block of Clip 823 is recorded in both 'aaa' as the last block of Clip 822 and 'bbb' as the first block of Clip 823.

When configured in this manner, upon reading 'aaa' as the last block of Clip 822, it is possible to use 'aaa' as the last block of following Clip 822 as a notice of the timing of look-ahead reading.

More specifically, when the look-ahead reading is started after the linked destination is detected, there is a possibility that the block 'bbb' as the data to be displayed next cannot be acquired in time. Hence, by detecting the jumping to the following data in advance when 'aaa' as the preceding block is read, it is possible to trigger the timing of look-ahead reading.

As has been described, because the end portion of the contents information recorded in a first recording medium and the head portion of the contents information recorded in a second recording medium are recorded in an interleaved form, by detecting the link to the second recording medium while reproducing the part of the contents information recorded in the first recording medium, it is possible to reproduce the contents information without any interruption while the linked destination is searched for.

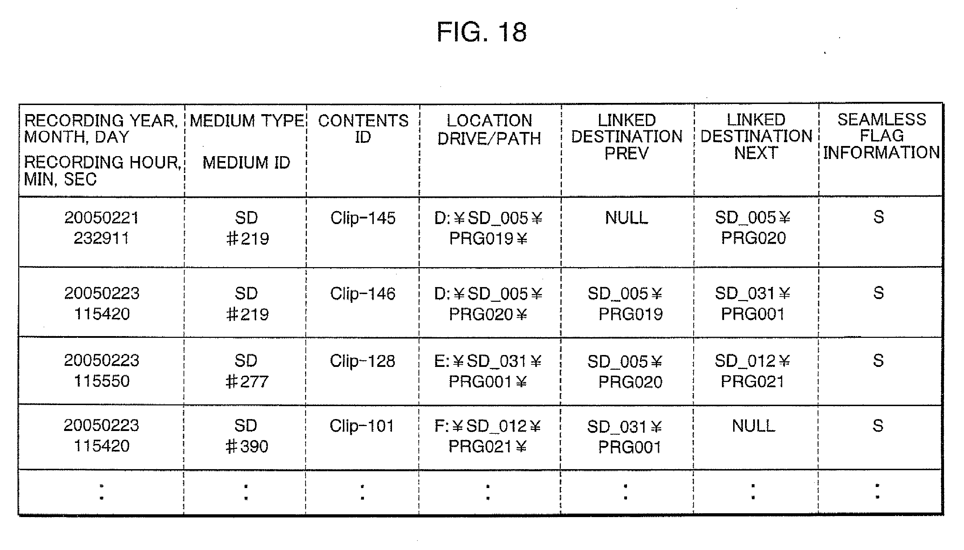

Fig. 18 is a view showing an example of the all media relevant information integrated management table in the information recording/reproducing device according to the second embodiment of the invention. The example of the all media relevant information integrated management table of the second embodiment shown in Fig. 18 is the same as the example of the all media relevant information integrated management table of the first embodiment shown in Fig. 5 in many respects. The all media relevant information integrated management table of the second embodiment is also generated, for example, in units of Clips of each Shot in each SD card.

Items recorded in the all media relevant information integrated management table include, for example, relevant information containing the recording year, month, and day and the recording hour, minute, and second, the type of medium, the medium ID number, the location path where the recording medium is present, information about the linked destination (PREV) where a part preceding Clip of interest is recorded, information about the linked destination (NEXT) where a part succeeding this Clip is recorded, and so forth.

Differences regarding the items in the all media relevant information integrated management table from the example of the all media relevant information integrated management table of the first embodiment are that the item of 'content ID' is included, that 'path' alone is the information held as the linked destination, and that an item of 'seamless flag information is included. It should be appreciated, however, that these items in the all media relevant information integrated management table are a mere example, and the items are not limited to those specified above.

For example, in the first item of the all media relevant information integrated management table shown in Fig. 18, the relevant information about one Clip recorded in an SD card is recorded. In this relevant information, it is recorded that this Clip was recorded in February 21, 2005 and the recording time was 23 o'clock 29 min 11 sec.

It should be appreciated that this configuration is a mere example and the information is not necessarily limited to the content as above. It may contain information about time on the scale finer than hour, for example, information in units of milliseconds, microseconds, and nanoseconds, or alternatively, it may contain information about the recording start time and the recording end time, or a time length during recording, and so forth.

In the second item of the all media relevant information integrated management table, the type of the recording medium in which this Clip is recorded, for example, SD cards, BD's (Blu-ray Discs), DVD's (Digital Versatile Discs), HD's (Hard Discs), or the type of various recoding media other than the foregoing, is recorded. In the first record shown in Fig. 18, information indicating that the type of the recording medium is an SD (SD card) is recorded, and also information indicating that the medium ID is #219' is recorded. The medium ID can be of various forms depending on the types of recording media, and it is a unique ID number to identify the recording medium.

In the first record shown in Fig. 18, it is recorded that the medium ID of the recording medium is '#219', and in the second record shown in Fig. 18, it is recorded that the medium ID of the recording medium is '#219'. Hence, it is understood that these two recording media are the same recording medium.

In the third record shown in Fig. 18, it is recorded that the medium ID of the recording medium is '#277', and in the fourth record shown in Fig. 18, it is recorded that the medium ID of the recording medium is '#390'. Hence, it is understood that these recording media are recording media different from each other.

The medium ID may be only one number in the world, and it can also be only one number to the extent that no inconvenience will be caused to the users. Alternatively, the medium ID is not necessarily limited to numerals and it may contain a character (characters).

In the third item of the all media relevant information integrated management table, the content ID is recorded. This is an ID number unique to the contents information. It may be only one number in the world, and it can also be only one number to the extent that no inconvenience will be caused to the users. Alternatively, the contents ID is not necessarily limited to numerals, either, and it may contain a character (characters).

In the example shown in Fig. 18, the contents ID of the first contents is 'Clip-145', the contents ID of the second contents is 'Clip-146', the contents ID of the third contents is 'Clip-128', and the contents ID of the fourth contents is 'Clip-101'.

In the fourth item of the all media relevant information integrated management table, the location of the recording drive where the recording medium in which is recorded the contents information is present, for example, a path or a drive name for an access or management specified by the file system or the OS is recorded. Owing to this information, not only the information recording/reproducing device becomes able to identify the recording drive where the recording medium in which is recorded Clip of interest is present or loaded, but it also becomes able to access the recording drive and the recording medium. Moreover, it becomes able to manage the recording drive and the recording medium.

In the first record shown in Fig. 18, it is recorded that the location-path of the recording drive is 'D:¥SD_005¥PRG019¥', and in the second record shown in Fig. 18, it is recorded that the location path of the recording drive is 'D:¥SD_005¥PRG020¥'. Also, in the third record shown in Fig. 18, it is recorded that the location path of the recording drive is 'E:¥SD_031¥PRG001¥', and in the fourth record shown in Fig. 18, it is recorded that the location path of the recording drive is 'F:¥SD_012¥PRG021¥'.

In this manner, it is understood that the first record and the second record shown in Fig. 18 are in the same SD card loaded in the drive 'D', whereas the third record and the fourth record shown in Fig. 18 are in different SD cards loaded in the drive 'E' and the drive 'F', respectively.

Subsequently, in the fifth item of the all media relevant information integrated management table, information about the linked destination (PREV) where a part preceding the contents information is recorded, is recorded. To be more concrete, for example, because 'NULL' is recorded in the first record shown in Fig. 18, it is understood that there is no part preceding this Clip.

Also, in the second record shown in Fig. 18, it is recorded that the path of the part preceding the Clip is 'SD_005¥PRG019'. Because this path is the same as the path in the location, the drive name, and the path of the first contents shown in Fig. 18, it is understood that the part preceding the second contents information shown in Fig. 18 is the first contents information shown in Fig. 18.

Likewise, in the third record shown in Fig. 18, it is recorded that the path of the part preceding this Clip is 'SD_005¥PRG020'. Because this path is the same as the path in the location, the drive name, and the path of second contents shown in Fig. 18, it is understood that the part preceding the third contents information shown in Fig. 18 is the second contents information shown in Fig. 18.

Likewise, in the fourth record shown in Fig. 18, it is recorded that the path of the part preceding this Clip is 'SD_031¥PRG001'. Because this path is the same as the path in the location, the drive name, and the path of the third contents shown in Fig. 18, it is understood that the part preceding the fourth contents information shown in Fig. 18 is the third contents information shown in Fig. 18.

Subsequently, in the sixth item of the all media relevant information integrated management table, information about the linked destination (NEXT) where the part succeeding the contents information is recorded, is recorded. To be more concrete, for example, in the first record shown in Fig. 18, it is recorded that the path of the part succeeding this Clip is 'SD_005¥PRG020'. Because this path is the same as the path in the location, the drive name, and the path of the second contents shown in Fig. 18, it is understood that the part succeeding the first contents information shown in Fig. 18 is the second contents information shown in Fig. 18.

In addition, in the second record shown in Fig. 18, it is recorded that the path of the part succeeding this Clip is 'SD_031¥PRG001'. Because this path is the same as the path in the location, the drive name, and the path of the third contents shown in Fig. 18, it is understood that the part succeeding the second contents shown in Fig. 18 is the third contents information shown in Fig. 18.

Likewise, in the third record shown in Fig. 18, it is recorded that the path of the part succeeding this Clip is 'SD_012¥PRG021'. Because this path is the same as the path in the location, the drive name, and the path of the fourth contents shown in Fig. 18, it is understood that the part succeeding the third contents information shown in Fig. 18 is the fourth contents information shown in Fig. 18.

Likewise, in the fourth record shown in Fig. 18, because 'NULL' is recorded, it is understood that there is no part succeeding this Clip. In other words, it is indicated that four pieces of content information from the first contents information to the fourth contents information recorded in the all media relevant information integrated management table shown in Fig. 18 are continuous Clips of one Shot.

It should be appreciated, however, that this configuration is a mere example, and Clips recorded in the all media relevant information integrated management table are not necessarily continuous Clips of one Shot as were in the example described above. Even when they are continuous Clips of one Shot, pieces of the contents information are not necessarily recorded in the order in which they are recorded and reproduced, and they can be recorded in any order.

In the next seventh item of the all media relevant information integrated management table, the seamless flag information is recorded, which indicates whether the part preceding and the part succeeding the contents information of interest are recorded in an interleaved form. The seamless flag information indicates whether the contents information is recorded in an interleaved form as is at the end of Clip 822 and the head of Clip 823 of Shot 812 shown in Fig. 17.

Accordingly, when the information recording/reproducing device according to the second embodiment of the invention reproduces the contents information, the look-ahead reading method is changed from the end of Clip 822 to the head of Clip 823 of Shot 812 of Fig. 17, and the device becomes able to operate according to such look-ahead reading. This example has been described on the assumption that the link in the forward direction and the link in the backward direction are the same by recording only one piece of seamless flag information for ease of understanding. However, two pieces of seamless flag information may be recorded, so that the link in the forward direction and the link in the backward direction are set separately.

Also, in the example shown in Fig. 18, the drive name was recorded to be contained in the location, the drive name, and the path where the contents information of interest is present. However, only the path is recorded in the information specifying the linked destination (both preceding and succeeding ones) and the drive name is not recorded therein. The reason why is as follows. That is, in a case where the recording media managed by the all media relevant information integrated management table are recording media of a removable type, it is usually unexpected that the medium type and the medium ID change with normal use conditions, whereas the locations-paths of the recording drives where the recording media are present can change with normal use conditions. Hence, there is a possibility that the locations (drive names) of the recording drives where the recording media in which are recorded respective Clips change with a use. Information indicating the latest states is recorded in the all media relevant information integrated management table, and when a change occurs in the state, the table is updated automatically or a message informing the occurrence of a change is displayed on the display screen or the like each time a change occurs to call user's attention.

Also, only four Clips are shown in the all media relevant information integrated management table shown in Fig. 18. It should be appreciated, however, that this configuration is a mere example, and information about any number of Clips can be recorded in the all media relevant information integrated management table.

In addition, this example has been described on the assumption that the all media relevant information integrated management table is recorded in the contents attachment information file. It should be appreciated, however, that this configuration is a mere example, and the all media relevant information integrated management table may be recorded in recording media other than the contents attachment information file or another portion of the information recording/reproducing device of the invention, for example a non-volatile memory, a volatile memory, a ROM or an a RAM, or alternatively, it may be recorded in an external recording medium or another computer, for example, a server or the like linked to the network.

### (Third Embodiment)

A third embodiment of the invention will now be described. However, because the third embodiment of the invention is the same as the first embodiment and the second embodiment of the invention in many respects, descriptions of the same portions are omitted and different portions alone will be described. Hence, all the portions that will not be described in the third embodiment of the invention are the same as the counterparts in the first embodiment and the second embodiment of the invention.

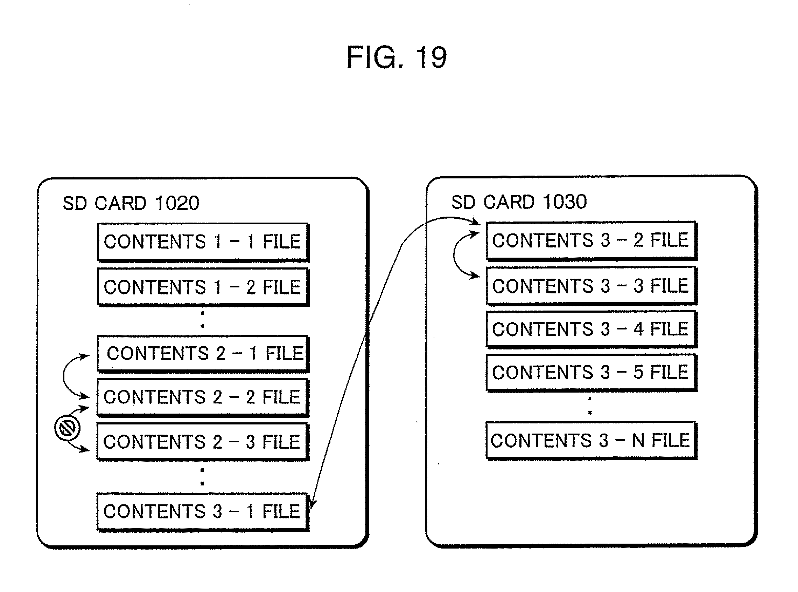

Fig. 19 is a conceptual view showing a state where contents information is recorded across plural information recording media in the information recording/reproducing device according to the third embodiment of the invention. To be more concrete, in Fig. 19, contents 1, contents 2, and contents 3 are recorded across an SD card 1020 and an SD card 1030.

In the example shown in Fig. 19, the contents 1 are made of two files, a contents 1 - 1 file and a contents 1 - 2 file, and recorded in the SD card 1020 alone without being recorded across plural recording media.

Likewise, the contents 2 are made of three files, a contents 2 - 1 file, a contents 2 - 2 file, and a contents 2 - 3 file, and recorded in the SD card 1020 alone without being recorded across plural recording media.

However, the contents 3 are made of N files, a contents 3 - 1 file, a contents 3- 2 file, a contents 3-3 file, ..., and a contents 3 - N file, and recorded across two recording media, the SD card 1020 and the SD card 1030.

Further, Fig. 19 shows a state where a normal link is enabled between the contents 2 - 1 file and the contents 2-2 file of the contents 2 recorded in the SD card 1020, whereas a normal link is not enabled between the contents 2- 2 file and the contents 2-3 file due to an abnormality of some kind. In a state where a normal link is not enabled due to an abnormally of some kind is indicated by a mark, which is a circle having a diagonal line inside (a mark as a road traffic sign representing prohibited actions), put on a semi-circular arrow indicating a linked state.

Furthermore, Fig. 19 shows a state where the contents 3, which are a single entity of contents information, are recorded across the two recording media, the SD card 1020 and the SD card 1030, while a normal link is enabled between the contents 3 - 1 file of the contents 3 recorded in the SD card 1020 and the contents 3 - 2 file of the contents 3 recorded in the SD card 1030. In addition, it shows a state where a normal link is also enabled between the contents 3-2 file and the contents 3-3 file of the contents 3 recorded in the SD card 1030.

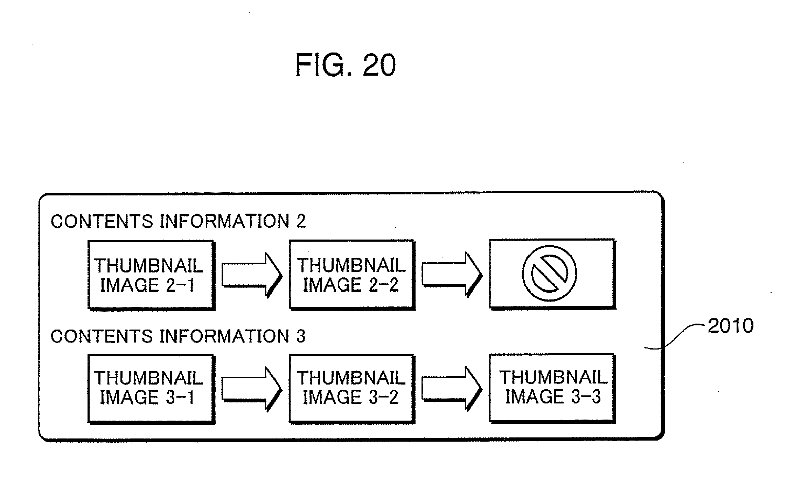

Fig. 20 is a view showing an example of the display screen in the recording state of the contents information shown in Fig. 19. As has been described, the contents 2 are made of the contents 2-1 file, the contents 2 - 2 file, and the contents 2-3 file recorded in the SD card 1020, and a normal link is enabled between the contents 2 - 1 file and the contents 2 - 2 file. A normal link is not enabled between the contents 2 - 2 file and the contents 2 - 3 file due to an abnormality of some kind.

In this case, the thumbnail image of the first frame of the contents 2 - 1 file is displayed on a display screen 2010, and an arrow indicating the presence of a linked destination is displayed next. In the direction indicated by the arrow, the thumbnail image of the first frame of the following contents 2 - 2 file is displayed, and an arrow indicating the presence of a linked destination is displayed next. Herein, because a normal link is not enabled between the contents 2 - 2 file and the contents 2 - 3 file, in the direction indicated by the arrow, the thumbnail image of the first frame of the following contents 2 - 3 file is not displayed, and instead, a mark indicating that a normal link is not enabled due to an abnormality of some kind, for example, a mark, which is a circle having a diagonal line inside, is displayed thereon.

For the contents 3, a normal link is enabled between the contents 3 - 1 file recorded in the SD card 1020 and the contents 3 - 2 file, the contents 3-3 file, ..., and the contents 3 - N file recorded in the SD card 1030. On the display screen 2010, the thumbnail image of the first frame of the contents 3 - 1 file is displayed, and an arrow indicating the presence of a linked destination is displayed next. In the direction indicated by the arrow, the thumbnail image of the first frame of the following contents 3 - 2 file is displayed, and an arrow indicating the presence of a linked destination is displayed next. Further, in the direction indicated by the arrow, the thumbnail image of the first frame of the following contents 3-3 file is displayed. The thumbnail images can be displayed, for example, up to the contents 3 - N file by a scroll operation or the like.

It should be appreciated, however, that the configuration to display, for example, the thumbnail image of the first frame of the contents 2 - 1 file on the display screen 2010 is a mere example. The thumbnail image of the first image of each contents file is not necessarily displayed thereon, and it is sufficient to display an image showing the some content of the contents file.

In other words, the file name of the contents file alone may be displayed, and the display of the thumbnail image of the contents file and the display of the file name alone may be switched. In this case, the user interface unit 612 accepts a display switching by the user, and the application unit 614 switches between the display of the thumbnail image of the contents file and the display of the file name alone.

Also, the information recording/reproducing device of this embodiment may accept a switching between a first display mode in which plural contents files are displayed collectively, and a second display mode in which plural contents files are displayed by recording medium, so that the contents files are displayed in the accepted display mode. In other words, a switching between the first display mode in which the thumbnail images of plural contents files are displayed collectively as shown in Fig. 20 and the second display mode in which the file names of plural contents files are displayed by recording medium as shown in Fig. 19 is accepted, and the contents files are displayed in the display mode accepted from the user.

In this case, a single entity of contents information is divided into plural contents files and recorded in the SD card 1020 (first recording medium) and the SD card 1030 (second recording medium). Because the contents files are displayed by switching between the first display mode in which plural contents files are displayed not by recording medium but collectively and the second display mode in which the plural contents files are display by recording medium, the user is able to choose a desired display mode according to the use circumstances.

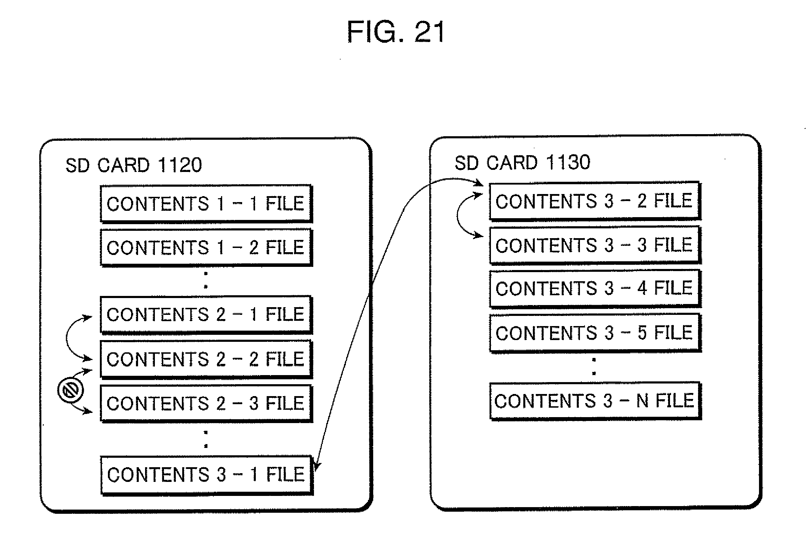

Likewise, Fig. 21 is a conceptual view showing another example of the state where contents information is recorded across plural information recording media in the information recording/ reproducing device according to the third embodiment of the invention. To be more concrete, in Fig. 21, contents 1, contents 2, and contents 3 are recorded across an SD card 1120 and an SD card 1130.

As with the example shown in Fig. 19 described above, in the example shown in Fig. 21, the contents 1 are made of two files, the contents 1 - 1 file and the contents 1 - 2 file, and recorded in the SD card 1120 alone without being recorded across plural recording media.

Likewise, as with the example shown in Fig. 19 described above, the contents 2 are made of three files, the contents 2 - 1 file, the contents 2 - 2 file, and the contents 2 - 3 file, and recorded in the SD card 1120 alone without being recorded across plural recording media.

Further, as with the example shown in Fig. 19 described above, the contents 3 are made of N files, the contents 3 - 1 file, the contents 3 - 2 file, the contents 3 - 3 file, ..., and the contents 3 - N file, and recorded across two recording media, the SD card 112 and the SD card 1130.

As with the example shown in Fig. 19 described above, a state is shown where a normal link is enabled between the contents 2 -1 file and the contents 2 - 2 of the contents 2 recorded in the SD card 1120, whereas a normal link is not enabled between the contents 2 - 2 file and the contents 2 - 3 file due to an abnormality of some kind.

Further, Fig. 21 shows a state where the contents 3, which are a single entity of contents information, is recorded across two recoding media, the SD card 1120 and the SD card 1130, and a normal link is enabled between the contents 3 - 1 file of the contents 3 recorded in the SD card 1120 and the contents 3-2 file of the contents 3 recorded in the SD card 1130, and a normal link is also enabled between the contents 3 - 2 file and the contents 3 - 3 file of the contents 3 recorded in the SD card 1130. This is the same as in the example shown in Fig. 19 described above, too.

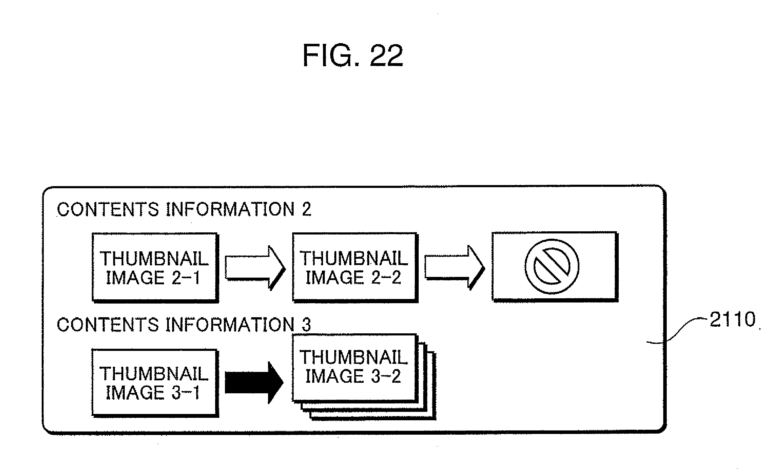

Fig. 22 is a view showing an example of the display screen in the recording state of the contents information shown in Fig. 21. As has been described, the contents 2 are made of the contents 2-1 file, the contents 2-2 file, and the contents 2 - 3 file recorded in the SD card 1120, and a normal link is enabled between the contents 2 - 1 file and the contents 2-2 file. A normal link is not enabled between the contents 2-2 file and the contents 2 - 3 file due to an abnormality of some kind.

In this case, on the display screen 2110, the thumbnail image of the first frame of the contents 2 - 1 file is displayed and an arrow indicating the presence of a linked destination is displayed next. In the direction indicated by the arrow, the thumbnail image of the first frame of the following contents 2-2 file is displayed and an arrow indicating the presence of a linked destination is displayed. Because a normal link is not enabled between the contents 2 - 2 file and the contents 2-3 file, in the direction indicated by the arrow, the thumbnail image of the first frame of the following contents 2 - 3 file is not displayed, and instead, a mark indicating that a normal link is not enabled due to an abnormality of some kind is displayed. This is the same as in the example shown in Fig. 20 described above, too.

Also, for the contents 3, a normal link is enabled between the contents 3 - 1 file recorded in the SD card 1120 and the contents 3 - 2 file, the contents 3 - 3 file, ..., and the contents 3 - N file recorded in the SD card 1130. On the display screen 2110, the thumbnail image of the first frame of the contents 3 - file is displayed and an arrow indicating the presence of a linked destination is displayed. In the direction indicated by the arrow, the thumbnail image of the first frame of the following contents 3-2 file is displayed on the display screen 2110. This is the same as in the example shown in Fig. 20 described above, too.

It should be noted, however, that the contents 3 - 1 file and the contents 3 - 2 file are recorded across the SD card 1120 and the SD card 1130, which are information recording media different from each other. Hence, in the another example shown in Fig. 22, in order to indicate such a link, an arrow different from an arrow displayed when the contents files are recorded and linked in the same information recording medium without being recorded across different recording media is displayed. For instance, as is shown in Fig. 22 by way of example, an arrow in different color, or although it is not shown in the drawing, an arrow in a different shape may be displayed.

By seeing the arrow displayed on the display screen 2110 to indicate the link, the user is able to know whether the respective contents files are linked within the same information recording medium or they are linked across different information recording media.

Further, the contents 3 are made of many files including the contents 3 - 1 file recorded in the SD card 1120 and the contents 3 - 2 file, the contents 3 - 3 file, ..., and the contents 3 - N file recorded in the SD card 1130. Hence, in the example shown in Fig. 22, the thumbnail image is not displayed by content file contained in the SD card 1130 as the same information recording medium, and instead, a mark indicating the presence of many files is displayed underneath the thumbnail image representing the contents 3-2 file.

It should be noted that the mark indicating the presence of many files can be developed by an appropriate operation, so that the respective thumbnail images can be displayed, too. Also, information about the information recording medium in which the contents attachment information file corresponding to the thumbnail image is recorded, for example, at least one of the recording medium type, the medium ID, the contents ID, the drive name, the location, and the path, may be displayed below or on the periphery of each thumbnail image being displayed.

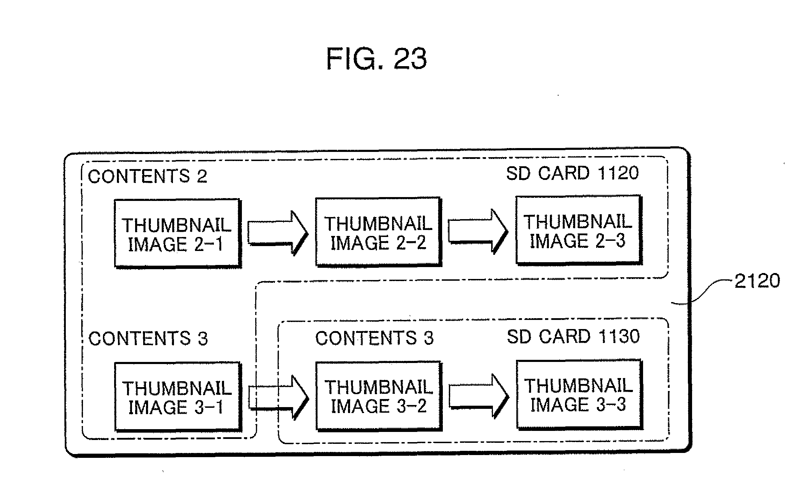

Also, for example, as is shown in Fig. 23, a frame of an alternate long and short dash line may represent an SD card as one recording medium to indicate that the contents 2 - 1 file, the contents 2- 2 file, and the contents 2 - 3 file of the contents 2 and the contents 3 - 1 file of the contents 3 are recorded in the SD card 1120 while the contents 3 - 2 file and the contents 3 - 3 file of the contents 3 are recorded in the SD card 1130.

In other words, on a display screen 2120, the thumbnail images of the contents 2 - 1 file, the contents 2 - 2 file, and the contents 2 - 3 file of the contents 2, and the thumbnail images of the contents 3 - 1 file, the contents 3 - 2 file, and the contents 3 -3 file of the contents 3 are displayed. On the display screen 2120, frames to divide the respective thumbnail images by recording medium are displayed.

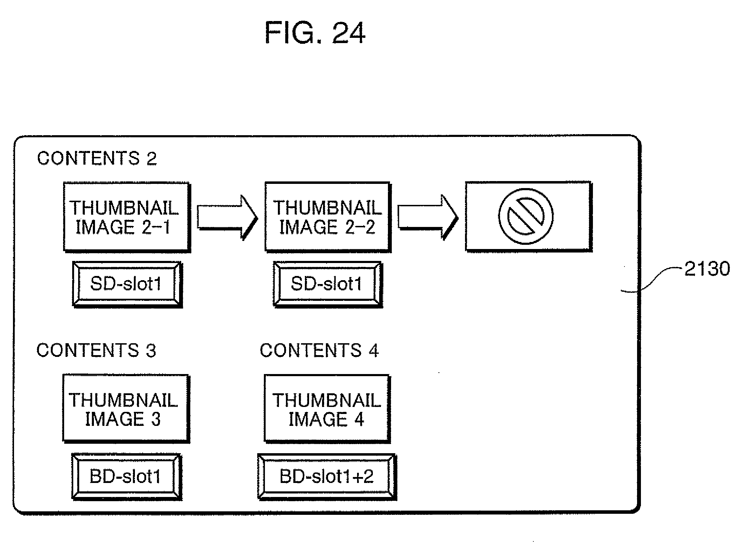

Also, as is shown in Fig. 24, the medium type in which the contents corresponding to the thumbnail image is recorded and the slot number or the like at which the medium is loaded may be displayed below each thumbnail image.

On a display screen 2130 shown in Fig. 24, 'SD-slot 1' is displayed below the thumbnail image 2-1 and the thumbnail image 2-2, 'BD-slot 1' is displayed below a thumbnail image 3, and 'BD-slot 1 + 2' is displayed below a thumbnail image 4. These indicate that the contents 2 corresponding to the thumbnail image 2-1 and the thumbnail image 2-2 are recorded in an SD card and the SD card is loaded in the slot assigned with the slot number 1. Also, these indicate that the contents 3 corresponding to the thumbnail image 3 are recorded in a BD (Blu-ray Disc) and the BD is loaded in the slot assigned with the slot number 1.

Further, these indicate that the contents 4 corresponding to the thumbnail image 4 are recorded in BD's (Blu-ray Discs) and the BD' s are loaded in the slot assigned with the slot number 1 and in the slot assigned with the slot number 2. In other words, they indicate in this example that the contents 4 corresponding to the thumbnail image 4 are recorded across the BD loaded in the slot assigned with the slot number 1 and the BD loaded in the slot assigned with the slot number 2.

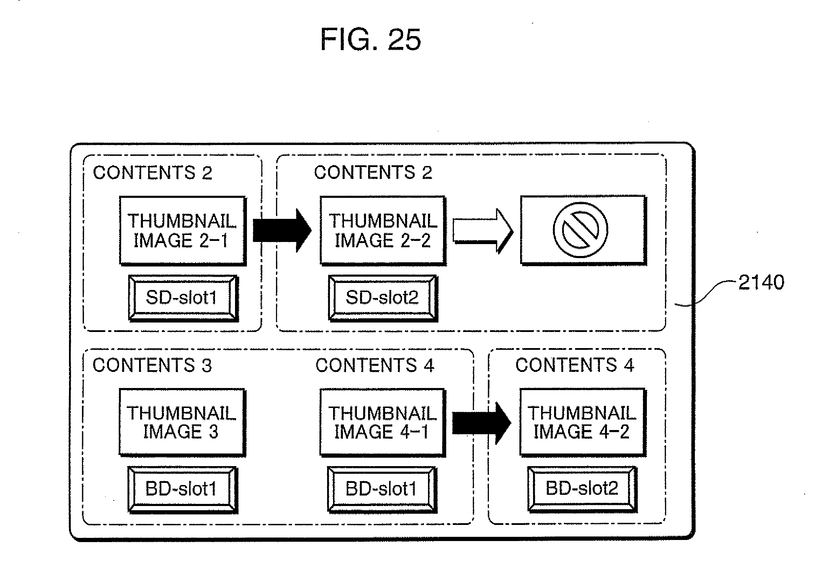

In addition, in the example shown in Fig. 25, for instance, a frame of an alternate long and short dash line represents an SD card as one recording medium, and at the same time, the medium type in which the contents corresponding to a thumbnail image are recorded and the slot number at which the medium is loaded are displayed below each thumbnail image.

For example, it is shown that the contents 2 are recorded across an SD card loaded in the slot assigned with the slot number 1 and an SD card 2 loaded in the slot assigned with the slot number 2 while the contents 2 - 1 file corresponding to the thumbnail image 2 - 1 is recorded in the SD card loaded in the slot assigned with the slot number 1 and the contents 2 - 2 file corresponding to the thumbnail image 2 - 2 is recorded in the SD card loaded in the slot assigned with the slot number 2.

It is also shown that, in the BD loaded in the slot assigned with the slot number 1, the contents 3 and a part of the contents 4 are recorded. The contents 3 corresponding to the thumbnail image 3 are entirely recorded in the BD loaded in the slot assigned with the slot number 1, and the contents 4 - 1 file, which is a part of the contents 4 corresponding to the thumbnail image 4 - 1, is recorded in the BD loaded in the slot assigned with the slot number 1.

It is also shown that the contents 4-2 file, which is the rest part of the contents 4 corresponding to the thumbnail image 4 - 2, is recorded in the BD loaded in the slot assigned with the slot number 2. In other words, it is shown that the contents 4 are recorded across the BD loaded in the slot assigned with the slot number 1 and the BD loaded in the slot assigned with the slot number 2.

Accordingly, the user is able to know more detailed information regarding the contents information corresponding to the thumbnail image, for example, the drive-slot or the like where the recording media are loaded.

On a display screen 2140 of Fig. 25, a frame to divide the thumbnail images of the respective contents files by recording medium is displayed, and a blank arrow indicating that the contents files are continuous within the same recording medium is displayed while a color arrow indicating that the contents files are recorded across different recording media is displayed.

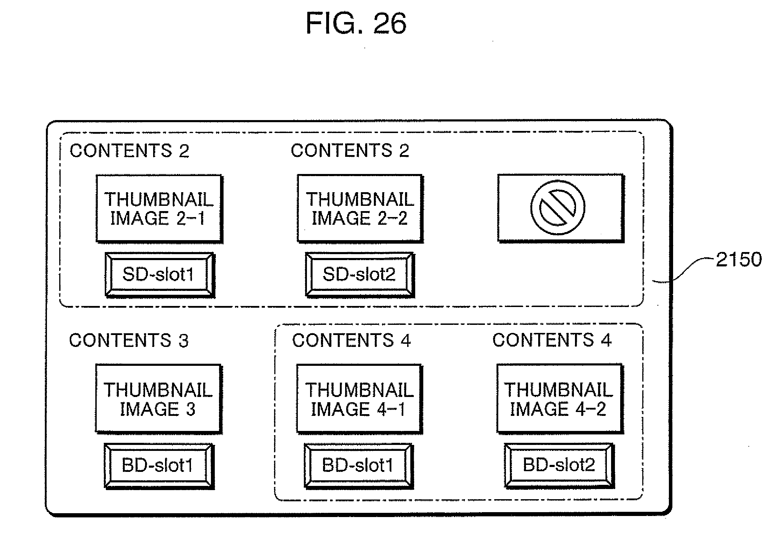

Also, in Fig. 25, a frame of an alternate long and short dash line is shown for each recording medium. However, one frame does not necessarily indicate one recording medium, and as is shown in Fig. 26, a frame of an alternate long and short dash line may be displayed for one entity of contents. This configuration makes it easier to understand which contents are recorded across which recording media. In the respective drawings, a mark, such as an arrow indicating a linked state, can be omitted.

The procedure for the information recording/reproducing device 600 to record and reproduce the content information of various kinds is one embodiment of an information recoding/reproducing method of the present application, and the information recording/reproducing device 600 is controlled by a micro computer and a program that controls operations thereof. The program is one embodiment of an information recording/reproducing program of the present application, and it is recorded and held in a semiconductor memory, such as a RAM and a ROM, a recording medium, such as an HDD and a DVD, that records information by a magnetic method or an optical method, either solely or in combination, or any other appropriate method. The recording medium is one embodiment of a computer-readable recording medium containing the information recording/reproducing program of the invention.

Specific embodiments described above chiefly contain the inventions having the following configurations.

An information recording/reproducing device according to an aspect of the invention includes: a contents information recording unit for recording a part of contents information into a first recording medium and recording a rest part of the contents information into a second recording medium different from the first recording medium; and a link information recording unit for generating link information indicating that the part of the contents information recorded in the first recording medium is continuous with the rest part recorded in the second recording medium, and recording the thus-generated link information into at least one of the first recording medium and the second recording medium, wherein the link information recording unit records the link information into a file different from a file in which the contents information is recorded.

An information recording/reproducing method according to another aspect of the invention includes: a contents information recording step of recording a part of contents information into a first recording medium, and recording a rest part of the contents information into a second recording medium different from the first recording medium; and a link information recording step of generating link information indicating that the part of the contents information recorded in the first recording medium is continuous with the rest part recorded in the second recording medium, and recording the thus-generated link information into at least one of the first recording medium and the second recording medium, wherein, in the link information recording controlling step, the link information is recorded in a file different from a file in which the contents information is recorded.

An information recording/reproducing program according to still another aspect of the invention causes a computer to function as: a contents information recording control unit for providing an instruction to record a part of contents information into a first recording medium and to record a rest part of the contents information into a second recording medium different from the first recording medium; and a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium, wherein the link information recording control unit provides an instruction to record the link information into a file different from a file in which the contents information is recorded.

A computer-readable recording medium containing an information recording/reproducing program according to still another aspect of the invention contains an information recording/reproducing program that causes a computer to function as: a contents information recording control unit for providing an instruction to record a part of contents information into a first recording medium and to record a rest part of the contents information into a second recording medium different from the first recording medium; and a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium, wherein the link information recording control unit provides an instruction to record the link information into a file different from a file in which the contents information is recorded.

According to these configurations, a part of contents information is recorded into a first recording medium and the rest part of the contents information is recorded into a second recording medium different from the first recording medium. The link information indicating that the part of the contents information recorded in the first recording medium is continuous with the rest part recorded in the second recording medium is generated, and the link information thus generated is recorded in at least one of the first recording medium and the second recording medium. In this instance, the link information is recorded in a file different from a file in which the contents information is recorded.

Hence, because the link information indicating that the part of the contents information recorded in the first recording medium is continuous with the rest part recorded in the second recording medium is recorded in at least one of the first recording medium and the second recording medium, it is possible to record a single entity of contents information across plural recording media. Further, because the reproduction sequence can be ensured, it is possible to perform seamless reproduction.

Also, in the information recording/reproducing device described above, it is preferable that the link information recording unit records the link information in a directory different from a directory in which the contents information is recorded. According to this configuration, because the link information is recorded in a directory different from a directory in which the contents information is recorded, the link information is not recorded together with the contents information. It is thus possible to read out the link information alone individually for use.

Also, in the information recording/reproducing device described above, it is preferable that the link information recording unit records the link information into a third recording medium different from the first recording medium and the second recording medium.

According to this configuration, because the link information is recorded in the third recording medium different from the first recording medium and the second recording medium, the link information is not recorded together with the contents information, which makes it possible to read out the link information alone individually for use. Also, because the link information is not recorded in a recording medium in which the contents information is recorded, a recording capacity of the contents information can be increased.

Also, in the information recording/reproducing device described above, it is preferable that the link information contains at least one of information specifying a type of the first recording medium and information specifying a type of the second recording medium. According to this configuration, because the link information contains at least one of the information specifying the type of the first recording medium and the information specifying the type of the second recording medium, it is possible to record the contents information across recording media of plural types.

Also, in the information recording/reproducing device described above, it is preferable that the link information contains at least one of identification information to identify the first recording medium and identification information to identify the second recording medium. According to this configuration, because the link information contains at least one of the identification information to identify the first recording medium and the identification information to identify the second recording medium, it is possible to specify the recording medium in which the contents information is recorded with ease.

Also, in the information recording/reproducing device described above, the link information contains at least one of identification information to identify a directory in which the contents information in the first recording medium is recorded and identification information to identify a directory in which the contents information in the second recording medium is recorded.

According to this configuration, because the link information contains at least one of the identification information to identify the directory in which the contents information in the first recording medium is recorded and the identification information to identify the directory in which the contents information in the second recording medium is recorded, it is possible to specify the directory in which the contents information is recorded with ease.

Also, in the information recording/reproducing device described above, it is preferable that the link information contains at least one of identification information to identify a file in which the contents information in the first recording medium is recorded and identification information to identify a file in which the contents information in the second recording medium is recorded.

According to this configuration, because the link information contains at least one of the identification information to identify a file in which the contents information in the first recording medium is recorded and the identification information to identify the file in which the contents information in the second recording medium is recorded, it is possible to specify the file in which the contents information is recorded with ease.

Also, in the information recording/reproducing device described above, it is preferable that the link information contains at least one of linked destination information specifying a linked destination of the contents information and linked source information specifying a linked source of the contents information. According to this configuration, because the link information contains at least one of the linked destination information specifying the linked destination of the contents information and the linked source information specifying the linked source of the contents information, by referring to the linked destination information, it is possible to reproduce the contents information recorded across plural recording media in a forward direction, and by referring to the linked source information, it is possible to reproduce the contents information recorded across plural recording media in an inverse direction.

Also, in the information recording/reproducing device described above, it is preferable that in a case where there are plural areas in which the rest part of the contents information is recorded, the link information recording unit generates link information indicating that the part of the contents information recorded in the first recording medium is continuous with the respective areas recorded in the second recording medium, and records the thus-generated link information into at least one of the first recording medium and the second recording medium.

According to this configuration, in a case where there are plural areas in which the rest part of the contents information is recorded, the link information indicating that the part of the contents information recorded in the first recording medium is continuous with the respective areas recorded in the second recording medium is generated, and the link information thus generated is recorded into at least one of the first recording medium and the second recording medium. Hence, even when the contents information is divided into plural segments and recorded in the second recording medium, it is possible to ensure the reproduction sequence of these segments.

Also, in the information recording/reproducing device described above, it is preferable to further include a link information read unit for reading out the link information, and a reproduction unit for reading out the contents information from the first recording medium and reproducing the contents information, and reading out the contents information from the second recording medium and reproducing the contents information according to the link information read out by the link information read unit.

According to this configuration, the link information is read out, and the contents information is read out from the first recording medium and then reproduced while the contents information is read out from the second recording medium and then reproduced according to the link information thus read out. Hence, by referring to the recorded link information, it is possible to reproduce seamlessly the contents information recorded across plural recording media.

Also, in the information recording/reproducing device described above, it is preferable to further include: a contents information deletion unit for deleting the contents information from the first recording medium; a link information read unit for reading out the link information; and a link information deletion unit for deleting the link information corresponding to the contents information deleted by the deletion control unit, and it is preferable that the contents information deletion unit deletes the contents information from the second recording medium that is a linked destination of the contents information according to the link information read out by the link information read unit.

According to this configuration, the contents information is deleted from the first recording medium and the link information is read out so as to delete the link information corresponding to the contents information that has been deleted. Then, the contents information is deleted from the second recording medium that is the linked destination of the contents information according to the read linked information. Hence, even when the contents information is deleted, it is possible to reflect the deletion of the contents information on the link information. It is thus possible to edit the contents information recorded across plural recording media with ease.

Also, in the information recording/reproducing device described above, it is preferable to further include a display unit for displaying the contents information recorded in the first recording medium and the contents information recorded in the second recording medium in correlation with each other.

According to this configuration, because the contents information recorded in the first recording medium and the contents information recorded in the second recording medium are displayed while being correlated with each other, even when the contents information is recorded across plural recording media, it is possible to display the contents information as if it were recorded in one recording medium.

Also, in the information recording/reproducing device described above, it is preferable that the display unit shows a different display on the basis of whether the first recording medium and the second recording medium is a same recording medium.

According to this configuration, because a different display is shown on the basis of whether the first recording medium and the second recording medium are the same recording medium, the user is able to confirm in which recording media the contents information divided across plural recording media is recorded.

Also, in the information recording/reproducing device described above, it is preferable that the display unit displays a sequential relation of the contents information recorded in the first recording medium and the contents information recorded in the second medium in a recognizable manner.

According to this configuration, because the sequential relation of the contents information recorded in the first recording medium and the contents information recorded in the second recording medium is displayed in a recognizable manner, the user is able to confirm in what order the contents information divided across plural recording media is recorded in these recording media.

Also, in the information recording/reproducing device described above, it is preferable that the display unit displays the number of files of the contents information recorded in the first recording medium and the second recording medium in a recognizable manner. According to this configuration, because the number of files of the contents information recorded in the first recording medium and the second recording medium is displayed in a recognizable manner, the user is able to confirm the number of files of the contents information recorded in the recording media.

Also, in the information recording/reproduction device described above, it is preferable that the display unit displays at least one of types of the first recording medium and the second recording medium, identification information to identify the first recording medium and the second recording medium, drives where the first recording medium and the second recording medium are loaded, and slots where the first recording medium and the second recording medium are loaded in a recognizable manner.

According to this configuration, at least one of the types of the first recording medium and the second recording medium, the identification information to identify the first recording medium and the second recording medium, the drives where the first recording medium and the second recording medium are loaded, and the slots where the first recording medium and the second recording medium are loaded are displayed in a recognizable manner. The user is thus able to specify in which recording media the contents information divided across plural recording media is recorded.

Also, in the information recording/reproducing device described above, it is preferable that: the contents information recording unit divides a single entity of contents information into plural files and records the files into the first recording medium and the second recording medium; a switching acceptance unit for accepting a switching of a first display mode in which the plural files are displayed collectively and a second display mode in which the plural files are displayed by recording medium is further included; and the display unit shows a display in a display mode accepted by the switching acceptance unit.

According to this configuration, a single entity of contents information is divided into plural files and recorded in the first recording medium and the second recording medium. The first display mode in which the plural files are displayed not by recording medium but collectively and the second display mode in which plural files are displayed by recording medium are switched and then displayed. The user is thus able to choose a desired display mode depending on the use circumstances.

An information recording/reproducing device according to still another aspect of the invention includes: a contents information recording unit for recording a part of contents information into a first recording medium and recording a rest part of the contents information into a second recording medium different from the first recording medium; and a link information recording unit for generating link information indicating that the part of the contents information recorded in the first recording medium is continuous with the rest part of the contents information recorded in the second recording medium, and recording the thus-generated link information into the part of the contents information recorded in the first recording medium and the rest part of the contents information recorded in the second recording medium.

According to this configuration, a part of the contents information is recorded into a first recording medium and the rest part of the contents information is recorded into a second recording medium different from the first recording medium. The link information indicating that the part of the contents information recorded in the first recording medium is continuous with the rest part of the contents information recorded in the second recording medium is generated. The link information thus generated is recorded into contents attachment information of the first recording medium and contents attachment information of the second recording medium.

Hence, the need to hold the link information separately is eliminated, and it is possible to reproduce the rest part of the contents information recorded in the second recording medium while reproducing the part of the contents information recorded in the first recording medium.

In the information recording/reproducing device described above, it is preferable that the link information recording unit records an end portion of the contents information recorded in the first recording medium and a head portion of the contents information recorded in the second recording medium by replacing the end portion and the head portion with each other.

According to this configuration, because the end portion of the contents information recorded in the first recording medium and the head portion of the contents information recorded in the second recording medium are recorded by being replaced with each other, it is possible to reproduce the rest part of the contents information recorded in the second recording medium by detecting the link to the second recording medium while reproducing the part of the contents information recorded in the first recording medium.

Also in the information recording/reproducing device described above, it is preferable that the link information recording unit records an end portion of the contents information recorded in the first recording medium and a head portion of the contents information recorded in the second recording medium by interleaving the end portion and the head portion.

According to this configuration, because the end portion of the contents information recorded in the first recording medium and the head portion of the contents information recorded in the second recording medium are recorded in an interleaved form, by detecting the link to the second recording medium while the part of the contents information recorded in the first recording medium is reproduced, it is possible to reproduce the contents information without any interruption while the linked destination is searched for.

### Industrial Applicability

With the information recording/reproducing device, the information recording/reproducing method, the information recording/reproducing program, and the computer-readable recording medium containing the information recording/reproducing program of the invention, it is possible to record a single entity of contents information across plural recording media, and further, seamless reproduction is enabled by ensuring the reproduction sequence. Hence, they can be used as an information recording/reproducing device that records, reproduces, and edits the contents information of various kinds, an information recording/reproducing method, an information recording/reproducing program, and a computer-readable recording medium containing the information recording/reproducing program.

## Claims

1. An information recording/reproducing device, comprising:
a contents information recording unit for recording a part of contents information into a first recording medium and recording a rest part of the contents information into a second recording medium different from the first recording medium; and
a link information recording unit for generating link information indicating that the part of the contents information recorded in the first recording medium is continuous with the rest part recorded in the second recording medium, and recording the thus-generated link information into at least one of the first recording medium and the second recording medium,
wherein the link information recording unit records the link information into a file different from a file in which the contents information is recorded.

2. The information recording/reproducing device according to Claim 1, wherein:
the link information recording unit records the link information in a directory different from a directory in which the contents information is recorded.

3. The information recording/reproducing device according to Claim 1 or 2, wherein:
the link information recording unit records the link information into a third recording medium different from the first recording medium and the second recording medium.

4. The information recording/reproducing device according to any of Claims 1 through 3, wherein:
the link information contains at least one of information specifying a type of the first recording medium and information specifying a type of the second recording medium.

5. The information recording/reproducing device according to any of Claims 1 through 4, wherein:
the link information contains at least one of identification information to identify the first recording medium and identification information to identify the second recording medium.

6. The information recording/reproducing device according to any of Claims 1 through 5, wherein:
the link information contains at least one of identification information to identify a directory in which the contents information in the first recording medium is recorded and identification information to identify a directory in which the contents information in the second recording medium is recorded.

7. The information recording/reproducing device according to any of Claims 1 through 6, wherein:
the link information contains at least one of identification information to identify a file in which the contents information in the first recording medium is recorded and identification information to identify a file in which the contents information in the second recording medium is recorded.

8. The information recording/reproducing device according to any of Claims 1 through 7, wherein:
the link information contains at least one of linked destination information specifying a linked destination of the contents information and linked source information specifying a linked source of the contents information.

9. The information recording/reproducing device according to any of Claims 1 through 8, wherein:
in a case where there are plural areas in which the rest part of the contents information is recorded, the link information recording unit generates link information indicating that the part of the contents information recorded in the first recording medium is continuous with the respective areas recorded in the second recording medium, and records the thus-generated link information into at least one of the first recording medium and the second recording medium.

10. The information recording/reproducing device according to any of Claims 1 through 9, further comprising:
a link information read unit for reading out the link information; and
a reproduction unit for reading out the contents information from the first recording medium and reproducing the contents information, and reading out the contents information from the second recording medium and reproducing the contents information according to the link information read out by the link information read unit.

11. The information recording/reproducing device according to any of Claims 1 through 10, further comprising:
a contents information deletion unit for deleting the contents information from the first recording medium;
a link information read unit for reading out the link information; and
a link information deletion unit for deleting the link information corresponding to the contents information deleted by the deletion unit,
wherein the contents information deletion unit deletes the contents information from the second recording medium that is a linked destination of the contents information according to the link information read out by the link information read unit.

12. The information recording/reproducing device according to any of Claims 1 through 11, further comprising:
a display unit for displaying the contents information recorded in the first recording medium and the contents information recorded in the second recording medium in correlation with each other.

13. The information recording/reproducing device according to Claim 12, wherein:
the display unit shows a different display on the basis of whether the first recording medium and the second recording medium are a same recording medium.

14. The information recording/reproducing device according to Claim 12 or 13, wherein:
the display unit displays a sequential relation of the contents information recorded in the first recording medium and the contents information recorded in the second medium in a recognizable manner.

15. The information recording/reproducing device according to any of Claims 12 through 14, wherein:
the display unit displays the number of files of the contents information recorded in the first recording medium and the second recording medium in a recognizable manner.

16. The information recording/reproduction device according to any of Claims 12 through 15, wherein:
the display unit displays at least one of types of the first recording medium and the second recording medium, identification information to identify the first recording medium and the second recording medium, drives where the first recording medium and the second recording medium are loaded, and slots where the first recording medium and the second recording medium are loaded in a recognizable manner.

17. The information recording/reproducing device according to Claim 12, wherein:
the contents information recording unit divides a single entity of contents information into plural files and records the files into the first recording medium and the second recording medium;
a switching acceptance unit for accepting a switching of a first display mode in which the plural files are displayed collectively and a second display mode in which the plural files are displayed by recording medium is further included; and
the display unit shows a display in a display mode accepted by the switching acceptance unit.

18. An information recording/reproducing device, comprising:
a contents information recording unit for recording a part of contents information into a first recording medium and recording a rest part of the contents information into a second recording medium different from the first recording medium; and
a link information recording unit for generating link information indicating that the part of the contents information recorded in the first recording medium is continuous with the rest part of the contents information recorded in the second recording medium, and recording the thus-generated link information into the part of the contents information recorded in the first recording medium and the rest part of the contents information recorded in the second recording medium.

19. The information recording/reproducing device according to Claim 18, wherein:
the link information recording unit records an end portion of the contents information recorded in the first recording medium and a head portion of the contents information recorded in the second recording medium by replacing the end portion and the head portion with each other.

20. The information recording/reproducing device according to Claim 18, wherein:
the link information recording unit records an end portion of the contents information recorded in the first recording medium and a head portion of the contents information recorded in the second recording medium by interleaving the end portion and the head portion.

21. An information recording/reproducing method, comprising:
a contents information recording step of recording a part of contents information into a first recording medium, and recording a rest part of the contents information into a second recording medium different from the first recording medium; and
a link information recording step of generating link information indicating that the part of the contents information recorded in the first recording medium is continuous with the rest part recorded in the second recording medium, and recording the thus-generated link information into at least one of the first recording medium and the second recording medium,
wherein, in the link information recording step, the link information is recorded in a file different from a file in which the contents information is recorded.

22. An information recording/reproducing program, causing a computer to function as:
a contents information recording control unit for providing an instruction to record a part of contents information into a first recording medium and to record a rest part of the contents information into a second recording medium different from the first recording medium; and
a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium,
wherein the link information recording control unit provides an instruction to record the link information into a file different from a file in which the contents information is recorded.

23. A camputer--readahie recording medium containing an information recording/reproducing program causing a computer to function as:
a contents information recording control unit for providing an instruction to record a part of contents information into a first recording medium and to record a rest part of the contents information into a second recording medium different from the first recording medium; and
a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium,
wherein the link information recording control unit provides an instruction to record the link information into a. file different from a file in which the contents information is recorded.

## Amended claims

### Amended claims under Art. 19.1 PCT

**1.** (Amended) An information recording/reproducing device, **characterized by** comprising:
a contents information recording unit for recording a part of contents information into a first recording medium and recording a rest part of the contents information into a second recording medium different from the first recording medium; and
a link information recording unit for generating link information indicating that the part of the contents information recorded in the first recording medium is continuous with the rest part recorded in the second recording medium, and recording the thus-generated link information into at least one of the first recording medium and the second recording medium,
wherein:
the link information recording unit records the link information into a file different from a file in which the contents information is recorded;
the link information contains at least one of information specifying a type of the first recording medium and information specifying a type of the second recording medium; and
a display unit for displaying the contents information recorded in the first recording medium and the contents information recorded in the second recording medium in correlation with each other is further included.

**2.** The information recording/reproducing device according to Claim 1, wherein:
the link information recording unit records the link information in a directory different from a directory in which the contents information is recorded.

**3.** The information recording/reproducing device according to Claim 1 or 2, wherein:
the link information recording unit records the link information into a third recording medium different from the first recording medium and the second recording medium.

**4.** (Cancelled)

**5.** The information recording/reproducing device according to any of Claims 1 through 4, wherein:
the link information contains at least one of identification information to identify the first recording medium and identification information to identify the second recording medium.

**6.** The information recording/reproducing device according to any of Claims 1 through 5, wherein:
the link information contains at least one of identification information to identify a directory in which the contents information in the first recording medium is recorded and identification information to identify a directory in which the contents information in the second recording medium is recorded.

**7.** The information recording/reproducing device according to any of Claims 1 through 6, wherein:
the link information contains at least one of identification information to identify a file in which the contents information in the first recording medium is recorded and identification information to identify a file in which the contents information in the second recording medium is recorded.

**8.** The information recording/reproducing device according to any of Claims 1 through 7, wherein:
the link information contains at least one of linked destination information specifying a linked destination of the contents information and linked source information specifying a linked source of the contents information.

**9.** The information recording/reproducing device according to any of Claims 1 through 8, wherein:
in a case where there are plural areas in which the rest part of the contents information is recorded, the link information recording unit generates link information indicating that the part of the contents information recorded in the first recording medium is continuous with the respective areas recorded in the second recording medium, and records the thus-generated link information into at least one of the first recording medium and the second recording medium.

**10.** The information recording/reproducing device according to any of Claims 1 through 9, further comprising:
a link information read unit for reading out the link information; and
a reproduction unit for reading out the contents information from the first recording medium and reproducing the contents information, and reading out the contents information from the second recording medium and reproducing the contents information according to the link information read out by the link information read unit.

**11.** The information recording/reproducing device according to any of Claims 1 through 10, further comprising:
a contents information deletion unit for deleting the contents information from the first recording medium;
a link information read unit for reading out the link information; and
a link information deletion unit for deleting the link information corresponding to the contents information deleted by the deletion unit,
wherein the contents information deletion unit deletes the contents information from the second recording medium that is a linked destination of the contents information according to the link information read out by the link information read unit.

**12.** (Cancelled)

**13.** (Amended) The information recording/reproducing device according to any of Claims 1 through 12, wherein:
the display unit shows a different display on the basis of whether the first recording medium and the second recording medium are a same recording medium.

**14.** (Amended) The information recording/reproducing device according to any of Claims 1 through 13, wherein:
the display unit displays a sequential relation of the contents information recorded in the first recording medium and the contents information recorded in the second medium in a recognizable manner.

**15.** (Amended) The information recording/reproducing device according to any of Claims 1 through 14, wherein:
the display unit displays the number of files of the contents information recorded in the first recording medium and the second recording medium in a recognizable manner.

**16.** (Amended) The information recording/reproduction device according to any of Claims 1 through 15, wherein:
the display unit displays at least one of types of the first recording medium and the second recording medium, identification information to identify the first recording medium and the second recording medium, drives where the first recording medium and the second recording medium are loaded, and slots where the first recording medium and the second recording medium are loaded in a recognizable manner.

**17.** (Amended) The information recording/reproducing device according to any of Claims 1 through 11, wherein:
the contents information recording unit divides a single entity of contents information into plural files and records the files into the first recording medium and the second recording medium;
a switching acceptance unit for accepting a switching of a first display mode in which the plural files are displayed collectively and a second display mode in which the plural files are displayed by recording medium is further included; and
the display unit shows a display in a display mode accepted by the switching acceptance unit.

**18.** (Cancelled)

**19.** (Amended) An information recording/reproducing device, comprising:
a contents information recording unit for recording a part of contents information into a first recording medium and recording a rest part of the contents information into a second recording medium different from the first recording medium; and
a link information recording unit for generating link information indicating that the part of the contents information recorded in the first recording medium is continuous with the rest part of the contents information recorded in the second recording medium, and recording the thus-generated link information into the part of the contents information recorded in the first recording medium and the rest part of the contents information recorded in the second recording medium,
wherein the link information recording unit records an end portion of the contents information recorded in the first recording medium and a head portion of the contents information recorded in the second recording medium by replacing the end portion and the head portion with each other.

**20.** (Amended) An information recording/reproducing device, comprising:
a contents information recording unit for recording a part of contents information into a first recording medium and recording a rest part of the contents information into a second recording medium different from the first recording medium; and
a link information recording unit for generating link information indicating that the part of the contents information recorded in the first recording medium is continuous with the rest part of the contents information recorded in the second recording medium, and recording the thus-generated link information into the part of the contents information recorded in the first recording medium and the rest part of the contents information recorded in the second recording medium,
wherein the link information recording unit records an end portion of the contents information recorded in the first recording medium and a head portion of the contents information recorded in the second recording medium by interleaving the end portion and the head portion.

**21.** (Amended) An information recording/reproducing method, **characterized by** comprising:
a contents information recording step of recording a part of contents information into a first recording medium, and recording a rest part of the contents information into a second recording medium different from the first recording medium; and
a link information recording step of generating link information indicating that the part of the contents information recorded in the first recording medium is continuous with the rest part recorded in the second recording medium, and recording the thus-generated link information into at least one of the first recording medium and the second recording medium,
wherein:
in the link information recording step, the link information is recorded in a file different from a file in which the contents information is recorded;
the link information contains at least one of information specifying a type of the first recording medium and information specifying a type of the second recording medium; and
a display step of displaying the contents information recorded in the first recording medium and the contents information recorded in the second recording medium in correlation with each other is further included.

**22.** (Amended) An information recording/reproducing program, **characterized by** causing a computer to function as:
a contents information recording control unit for providing an instruction to record a part of contents information into a first recording medium and to record a rest part of the contents information into a second recording medium different from the first recording medium; and
a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium,
wherein:
the link information recording control unit provides an instruction to record the link information into a file different from a file in which the contents information is recorded;
the link information contains at least one of information specifying a type of the first recording medium and information specifying a type of the second recording medium; and
the information recording/reproducing program further causes the computer to function as a display control unit for providing an instruction to display the contents information recorded in the first recording medium and the contents information recorded in the second recording medium in correlation with each other.

**23.** (Amended) A computer-readable recording medium containing an information recording/reproducing program **characterized by** causing a computer to function as:
a contents information recording control unit for providing an instruction to record a part of contents information into a first recording medium and to record a rest part of the contents information into a second recording medium different from the first recording medium; and
a link information recording control unit for providing an instruction to generate link information indicating that the part of the contents information recorded in the first recording medium is continuous with the rest part recorded in the second recording medium, and to record the thus-generated link information into at least one of the first recording medium and the second recording medium,
wherein:
the link information recording control unit provides an instruction to record the link information into a file different from a file in which the contents information is recorded;
the link information contains at least one of information specifying a type of the first recording medium and information specifying a type of the second recording medium; and
the information recording/reproducing program further causes the computer to function as a display control unit for providing an instruction to display the contents information recorded in the first recording medium and the contents information recorded in the second recording medium in correlation with each other.

Statement under Art. 19.1 PCT
Claims 1, 13 through 17, and 19 through 23 are amended and Claims 4, 12, and 18 are cancelled. Claim 1 is rewritten to include the limitations of Claims 4 and 12 now cancelled. Claims 21 through 23 are rewritten to be consistent with amended Claim 1. Claims 13 through 17 are rewritten to be depended from Claim 1. Further, Claims 19 and 20 are rewritten to an independent form so as to include the limitation of Claim 18 now cancelled.
